# EUROPÄISCHE PATENTSCHRIFT

(11) **EP 3 176 046 B1**
(45) Veröffentlichungstag und Bekanntmachung des Hinweises auf die Patenterteilung: **14.07.2021**
(21) Anmeldenummer: 16197937.2
(22) Anmeldetag: 09.11.2016
(51) Int. Cl.: B60W 30/18, B60W 40/04, G08G 1/01, G08G 1/16

(54) **VERFAHREN UND VORRICHTUNG IN EINEM KRAFTFAHRZEUG ZUM AUTOMATISIERTEN FAHREN**
METHOD AND DEVICE IN A MOTOR VEHICLE FOR AUTOMATED DRIVING
PROCÉDÉ ET DISPOSITIF DE CONDUITE AUTOMATIQUE DANS UN VÉHICULE AUTOMOBILE

(30) Priorität: 04.12.2015 DE 102015224338
(43) Veröffentlichungstag der Anmeldung: 07.06.2017
(73) Patentinhaber: VOLKSWAGEN AKTIENGESELLSCHAFT, 38440 Wolfsburg (DE)
(72) Erfinder: Perdomo Lopez, David, 38102 Braunschweig (DE); Jördens, Christian, 38120 Braunschweig (DE); Junge, Lutz, 38106 Braunschweig (DE); Darms, Michael, 38165 Lehre (DE)

(56) Entgegenhaltungen:
- WO-A1-2015/008588
- DE-A1-102005 020 429
- US-B1- 8 761 991
- JAVIER ALONSO ET AL: "Autonomous vehicle control systems for safe crossroads", TRANSPORTATION RESEARCH. PART C, EMERGING TECHNOLOGIES, PERGAMON, NEW YORK, NY, GB, Bd. 19, Nr. 6, 5. Juni 2011 (2011-06-05), Seiten 1095-1110, XP028289470, ISSN: 0968-090X, DOI: 10.1016/J.TRC.2011.06.002 [gefunden am 2011-06-30]

## Beschreibung

Die Erfindung betrifft ein Verfahren und eine Vorrichtung in einem Kraftfahrzeug zum automatisierten Fahren in einem Umfeld.

Moderne Kraftfahrzeuge weisen eine Vielzahl von Assistenzsystemen auf, welche den Fahrer beim Führen des Fahrzeugs unterstützen. Vermehrt kommen dabei semi-autonome und autonome Systeme zum Einsatz, die eine semi- oder vollautomatische Steuerung des Kraftfahrzeugs erlauben. Die Verarbeitung der dabei auftretenden Datenmengen führt zu einem großen Rechenaufwand.

Aus der DE 10 2010 010 856 A1 ist ein Verfahren zur automatischen Unterstützung eines Fahrers eines Kraftfahrzeugs bekannt. Dabei wird aus den Positionsdaten des Kraftfahrzeugs und den Daten des elektronischen Abbildes der Fahrzeugumgebung ein von dem Kraftfahrzeug aus der aktuellen Position heraus befahrbarer Fahrspurkorridor bestimmt, wobei der Fahrspurkorridor beidseitig jeweils von einem Fahrspurkorridorrand begrenzt wird und bei Unterschreitung eines Abstandes des Kraftfahrzeugs zu einem Fahrspurkorridorrand ein durch den Fahrer übersteuerbaren Querführungs- und/oder Längsführungseingriff durchgeführt wird, insbesondere durch Beaufschlagung einer Lenkung des Kraftfahrzeugs mit einem Lenkmoment, durch Änderung der Lenkübersetzungs-Kennlinie einer aktiven Lenkung des Kraftfahrzeugs, durch Änderung der Fahrpedal-Kennlinie des Fahrpedals des Kraftfahrzeugs und/oder durch Änderung des Motormoments des Motors des Kraftfahrzeugs.

Aus der DE 10 2010 018 333 A1 ist ein Verfahren und eine Auswertevorrichtung zum Auswerten von Informationen zumindest eines von zumindest einer optischen Kamera aufgenommenen Bildes bekannt. Beschrieben wird ein Verfahren zum Auswerten von Informationen zumindest eines von zumindest einer optischen Kamera aufgenommenen Bildes, wobei die zumindest eine optische Kamera Bestandteil eines Fahrzeugs ist. Das Verfahren weist folgende Schritte auf: Es erfolgt ein Aufnehmen zumindest eines Bildes mittels der zumindest einen optischen Kamera zumindest während einer Fahrt des Fahrzeugs auf einer Fahrbahn. Weiterhin erfolgt ein Ermitteln eines voraussichtlichen Verlaufs der Fahrbahn in einer Umgebung des Fahrzeugs mittels zumindest einer Ermittlungsvorrichtung des Fahrzeugs. Zudem erfolgt ein Ermitteln zumindest eines Bereiches des zumindest einen Bildes, der zumindest einen Teilbereich des ermittelten voraussichtlichen Verlaufs der Fahrbahn in der Umgebung des Fahrzeugs beinhaltet. Darüber hinaus erfolgt ein Auswerten von in dem zumindest einen ermittelten Bereich des zumindest einen Bildes enthaltenen Bildinformationen.

Aus der DE 10 2009 008 745 A1 ist ein Verfahren und System zur automatischen Verkehrsführung bekannt. Dabei werden verkehrsrelevante oder einen Straßenverkehr betreffende Informationen über ein Umfeld oder eine Umgebung von mehreren Verkehrsteilnehmern oder von einer Verkehrsinfrastruktur (z. B. Einrichtungen, welche einen Verkehr erfassen und/oder regeln) automatisch erfasst und als Umfelddaten an eine zentrale Steuereinheit übermittelt. Die Umfelddaten werden dann von der zentralen Steuereinheit in einem allgemeinen Umfeldmodell dargestellt, so dass dieses allgemeine Umfeldmodell das Umfeld der Verkehrsteilnehmer beschreibt. Um die Verkehrsführung der Verkehrsteilnehmer zu unterstützen, werden von der zentralen Steuereinheit aus dem allgemeinen Umfeldmodell diejenigen Verkehrsführungsdaten, welche ein Umfeld eines jeweiligen Verkehrsteilnehmers betreffen, automatisch an diesen Verkehrsteilnehmer übermittelt.

Der Erfindung liegt das technische Problem zu Grunde, ein Verfahren und eine Vorrichtung zum automatisierten Fahren eines Kraftfahrzeugs in einem Umfeld zur Verfügung zu stellen, bei der ein verringerter Rechenaufwand bei der Interpretation der Umfelddaten notwendig ist.

Die technische Aufgabe wird erfindungsgemäß durch ein Verfahren mit den Merkmalen des Patentanspruchs 1 und einer Vorrichtung mit den Merkmalen des Patentanspruchs 5 gelöst. Vorteilhafte Ausgestaltungen der Erfindung ergeben sich aus den Unteransprüchen.

Ein Szenario soll im Folgenden eine Menge von zeitlich geordneten und miteinander verbundenen elementaren Situationen sein. Ein solches Szenario kann beispielsweise ein Linksabbiegen, Geradeausfahren oder Rechtsabbiegen auf einer Kreuzung sein.

Eine elementare Situation bezeichnet einen Augenblick bzw. einen zeitlichen Abschnitt innerhalb eines Szenarios. Die elementare Situation umfasst dabei eine Szene und Informationen des Kraftfahrzeugs.

Eine Szene enthält eine Szenerie, wobei die Szenerie statische Objekte des Umfeldes umfasst. Die statischen Objekte sind beispielsweise Fahrbahnmarkierungen, Verkehrszeichen usw. Ferner umfasst die Szene auch dynamische Objekte, wie beispielsweise Ampelphasen, andere Verkehrsteilnehmer usw.

Es wird ein Verfahren zum automatisierten Fahren eines Kraftfahrzeugs zur Verfügung gestellt, umfassend die folgenden Schritte: Bereitstellen von Umfelddaten, Erkennen von Objekten in den Umfelddaten durch eine Umfeldwahrnehmungseinrichtung, Auswählen eines aktuellen Szenarios aus einer bereitgestellten Menge von bekannten Szenarien durch eine Szenario-Interpretationseinrichtung auf Grundlage der erkannten Objekte, wobei ein Szenario zeitlich geordnete und miteinander verbundene elementare Situationen aufweist, und wobei jeder elementaren Situation als Attribute zumindest ein Überwachungsbereich und ein Freigabekriterium zugeordnet sind, ferner nacheinander für jede der elementaren Situationen des aktuellen Szenarios: Schätzen eines Zielpunktes für die aktuell vorliegende elementare Situation durch die Szenario-Interpretationseinrichtung, Planen einer Trajektorie zu dem Zielpunkt durch eine Manöverplanungseinrichtung, Abfragen von Informationen über den zur elementaren Situation gehörenden Überwachungsbereich bei der Umfeldwahrnehmungseinrichtung durch die Szenario-Interpretationseinrichtung, Überprüfen eines Vorliegens des mindestens einen zur elementaren Situation gehörenden Freigabekriteriums auf Grundlage der abgefragten Informationen durch die Szenario-Interpretationseinrichtung, und sofern das mindestens eine Freigabekriterium erfüllt ist, automatisiertes Fahren entlang der Trajektorie bis zum Zielpunkt durch Steuern mindestens einer Aktorik des Kraftfahrzeugs durch eine Steuerung.

Ferner wird eine Vorrichtung zum automatisierten Fahren eines Kraftfahrzeugs geschaffen, umfassend eine Umfeldwahrnehmungseinrichtung zum Erkennen von Objekten in bereitgestellten Umfelddaten, eine Szenario-Interpretationseinrichtung zum Auswählen eines aktuellen Szenarios aus einer bereitgestellten Menge von bekannten Szenarien auf Grundlage der erkannten Objekte, wobei ein Szenario zeitlich geordnete und miteinander verbundene elementare Situationen aufweist, und wobei jeder elementaren Situation als Attribute zumindest ein Überwachungsbereich und ein Freigabekriterium zugeordnet sind, eine Manöverplanungseinrichtung und eine Steuerung, wobei die Szenario-Interpretationseinrichtung derart ausgebildet ist, einen Zielpunkt für eine aktuell vorliegende elementare Situation zu schätzen, Informationen über den zur elementaren Situation gehörenden Überwachungsbereich von der Umfeldwahrnehmungseinrichtung abzufragen und ein Vorliegen des mindestens einen Freigabekriteriums der aktuellen elementaren Situation auf Grundlage der abgefragten Informationen zu überprüfen, und wobei die Steuerung derart ausgebildet, sofern das mindestens eine Freigabekriterium erfüllt ist, das Kraftfahrzeug entlang einer von der Manöverplanungseinrichtung geplanten Trajektorie bis zum Zielpunkt durch Steuern mindestens einer Aktorik des Kraftfahrzeugs automatisiert zu fahren, und die Szenario-Interpretationseinrichtung ferner derart ausgebildet ist, nach Erreichen des Zielpunktes eine nächstfolgende elementare Situation des aktuellen Szenarios zu verarbeiten.

Die Kernidee der Erfindung ist, die Szenariointerpretation zu verbessern. Dazu wird ein Szenario in mehrere elementare Situationen zerlegt. Die elementaren Situationen weisen als ihnen zugeordnete Attribute jeweils mindestens einen Überwachungsbereich und ein Freigabekriterium auf. Die Idee dahinter ist, nicht alle Informationen, sondern nur die für eine aktuelle elementare Situation relevanten Informationen über das Umfeld des Kraftfahrzeugs auszuwerten.

Wird von der Szenario-Interpretationseinrichtung ein bestimmtes Szenario aus einer bereitgestellten Menge von Szenarien erkannt bzw. ausgewählt, beispielsweise ein Linksabbiegen auf einer Kreuzung, so umfasst dieses Szenario mehrere elementare Situationen, welche schrittweise aufeinanderfolgend durchlaufen werden müssen. In jeder aktuellen elementaren Situation kann bzw. muss dann nicht mehr das komplette Umfeld des Kraftfahrzeugs, sondern nur ein dieser elementaren Situation zugeordneter Überwachungsbereich überwacht werden.

Befindet sich das Kraftfahrzeug beispielsweise am Anfang des Szenarios in einer elementaren Situation vor einer Kreuzung ohne Ampel, welche den Verkehr regelt, und es existiert ein Zebrastreifen (d.h. Fußgänger haben immer Vorfahrt), so interpretiert die Szenario-Interpretationseinrichtung, dass das Kraftfahrzeug sich in einer elementaren Situation ohne Ampel befindet und der Überwachungsbereich kann lediglich den Zebrastreifen und die Bereiche links und rechts vom Zebrastreifen auf dem Gehweg umfassen. In diesem Überwachungsbereich wird dann überprüft, ob das der aktuellen elementaren Situation zugeordnete Freigabekriterium erfüllt ist. Ist als Freigabekriterium beispielsweise vorgesehen, dass auf dem Zebrastreifen oder in deren Nähe rechts und links davon keine Fußgänger vorhanden sind, so fragt die Szenario-Interpretationseinrichtung bei der Umfeldwahrnehmungseinrichtung ab, ob Fußgänger in dem Bereich vorhanden sind. Erhält sie dann von der Umfeldwahrnehmungseinrichtung die Information, dass keine Fußgänger vorhanden sind, so ist das Freigabekriterium erfüllt und die Szenario-Interpretationseinrichtung veranlasst das automatisierte Fahren zu einem von der Szenario-Interpretationseinrichtung geschätzten Zielpunkt. Anschließend wird dann die nächste elementare Situation abgearbeitet.

Die Zerlegung des Szenarios in mehrere elementare Situationen hat den Vorteil, dass ein komplexes Szenario im Straßenverkehr im Rahmen von Teilschritten gelöst werden kann. Die Zerlegung in elementare Situationen erlaubt es, dass jeweils nur ein Teilbereich des Umfeldes überwacht werden muss, wodurch immer nur eine reduzierte Datenmenge verarbeitet bzw. ausgewertet werden muss. Dies hat eine beträchtliche Reduktion des Rechenaufwands zur Folge.

Die Menge an bereitgestellten Szenarien umfasst dabei beispielsweise ein Linksabbiegen oder ein Rechtsabbiegen auf einer T-Kreuzung oder einer X-Kreuzung, ein Geradeausfahren an einer X-Kreuzung mit und ohne einem Verkehrszeichen (Stoppschild, Vorfahrtsschild) oder mit einer Lichtsignalanlage, welche den Verkehr regelt. Ein Szenario kann beispielsweise vorher bereitgestellt sein oder angelernt werden, beispielsweise für ein Einbiegen von einer öffentlichen Straße in eine private Auffahrt etc.

Zum Auswählen des Szenarios greift die Szenario-Interpretationseinrichtung vorzugsweise auch auf von der Manöverplanungseinrichtung bereitgestellte Informationen über eine geplante Route zu. Die Route umfasst dabei beispielsweise die Straßen, welche von einem Startpunkt bis zu einem Ziel der automatisierten Fahrt befahren werden sollen. Durch Berücksichtigung der Route lässt sich auf einfache Weise frühzeitig ein Szenario schätzen, beispielsweise ein Linksabbiegen, wenn die Route ein solches Manöver vorsieht.

In einer Ausführungsform ist vorgesehen, dass die Umfelddaten durch mindestens eine Sensorik bereitgestellt werden, wobei die mindestens eine Sensorik das Umfeld des Kraftfahrzeugs erfasst. Als Sensorik kommen dabei sämtliche bekannten Sensoriken in Frage, wie beispielsweise Kameras, Ultraschallsensoren, Laserscanner, Radarsensoren, TopView-Kameras etc.

In einer Ausführungsform ist vorgesehen, dass die Umfelddaten alternativ oder zusätzlich in Form einer Umfeldkarte bereitgestellt werden. Dies kann beispielsweise eine Straßenkarte sein, in der neben dem Verlauf der Straßen auch weitere Informationen hinterlegt sind, wie beispielsweise Straßenschilder, Vorfahrtsregeln, Lichtsignalanlagen usw. Eine solche Straßenkarte erleichtert über die darin hinterlegten Informationen die Auswahl eines Szenarios, da zum Beispiel auch bei nicht vollständigen Umfelddaten mit hoher Wahrscheinlichkeit zwischen einer T-Kreuzung und einer X-Kreuzung unterschieden werden kann.

In einer weiteren Ausführungsform ist vorgesehen, dass die Umfelddaten alternativ oder zusätzlich über eine Kommunikationsschnittstelle bereitgestellt werden. Dies ermöglicht beispielsweise eine Berücksichtigung von Car2X-Daten, welche von anderen Kraftfahrzeugen oder Verkehrsleitsystemen zur Verfügung gestellt werden.

In einer Ausführungsform ist vorgesehen, dass durch die Szenario-Interpretationseinrichtung fortlaufend überprüft wird, ob das ausgewählte aktuelle Szenario noch vorliegt oder eine Änderung des aktuellen Szenarios notwendig ist. Dies ermöglicht eine dynamische Anpassung des aktuellen Szenarios an das Umfeld. Beispielsweise kann auf diese Weise ein auf Grund mangelnder Daten der Umfeldwahrnehmungseinrichtung irrtümlicherweise ausgewähltes Szenario korrigiert werden. Ist beispielsweise eine T-Kreuzung ausgewählt worden und es stellt sich bei Annäherung an die Kreuzung heraus, dass es sich nicht um eine T-Kreuzung, sondern um eine X-Kreuzung handelt, so kann dies korrigiert werden, indem dann ein entsprechendes Szenario für die X-Kreuzung ausgewählt wird.

In einer Ausführungsform ist vorgesehen, dass innerhalb des mindestens einen Überwachungsbereichs einer elementaren Situation zukünftige Trajektorien von erkannten Objekten durch eine Prädiktionseinrichtung vorhergesagt werden. Dadurch wird es möglich, das Verhalten von Objekten in der Zukunft vorherzusagen bzw. abzuschätzen. Über die abgeschätzten zukünftigen Trajektorien kann eine Schätzung darüber getroffen werden, wo sich die Objekte befinden werden, wie sie relativ zum Kraftfahrzeug positioniert sein werden, und ob ein Objekt in der aktuellen elementaren Situation für das Kraftfahrzeug relevant ist bzw. berücksichtigt werden muss.

In einer Ausführungsform ist ferner vorgesehen, dass ein Freigabekriterium ist, dass eine Trajektorie des Kraftfahrzeugs zum nächstfolgenden Zielpunkt kollisionsfrei mit Trajektorien anderer Objekte ist. Dies ermöglicht eine konfliktfreie automatisierte Fahrt bis zum korrespondierenden Zielpunkt der aktuellen elementaren Situation. Zur Erhöhung der Sicherheit kann um die Trajektorien zusätzlich ein Sicherheitskorridor definiert werden, welcher zur Kollisionsvermeidung eingehalten werden muss.

Eine Ausführungsform sieht vor, dass mindestens eine elementare Situation ein weiteres Attribut aufweist, wobei das weitere Attribut ein bestimmtes Objekt ist, dessen Vorhandensein durch die Szenario-Interpretationseinrichtung bei der Umfeldwahrnehmungseinrichtung abgefragt wird. Auf diese Weise können zusätzliche Informationen hinterlegt werden, wie beispielsweise ein bestimmtes Verkehrszeichen. Darüber hinaus kann zusätzlich mit dem Objekt auch ein zugehöriges Freigabekriterium hinterlegt werden.

In einer weiteren Ausführungsform ist vorgesehen, dass die Schätzung des Zielpunktes von der Szenario-Interpretationseinrichtung dynamisch angepasst wird auf Grundlage der bei der Umfeldwahrnehmungseinrichtung abgefragten Informationen. Die Fähigkeit zur dynamischen Anpassung eines Zielpunktes ermöglicht eine flexible Reaktion auf die Gegebenheiten bzw. Veränderungen im Umfeld des Kraftfahrzeugs. Dies kann beispielsweise notwendig sein, wenn in der aktuellen elementaren Situation Informationen verfügbar werden, welche vorher bei der ursprünglichen Schätzung des Zielpunktes noch nicht zur Verfügung standen. So kann beispielsweise flexibel auf eine Baustelle reagiert werden, welche erst bei Annäherung erfasst wird.

Generell ist es stets möglich, dass eine automatisierte Fahrt beeinflusst oder abgebrochen werden kann. So kann der Fahrer des Kraftfahrzeugs beispielsweise immer in die automatisierte Fahrt eingreifen oder andere dafür vorgesehene Einrichtungen des Kraftfahrzeugs können die automatisierte Fahrt anhalten oder korrigieren. Findet zum Beispiel eine Kollision mit einem anderen Objekt statt, so wird die automatisierte Fahrt abgebrochen und das Kraftfahrzeug zum Stehen gebracht.

Nachfolgend wird die Erfindung anhand bevorzugter Ausführungsbeispiele unter Bezugnahme auf die Figuren näher erläutert. Hierbei zeigen:
- Fig. 1: eine schematische Darstellung von Bestandteilen eines typischen Szenarios;
- Fig. 2: eine schematische Darstellung einer typischen Verkehrssituation an einer X-Kreuzung zur Erläuterung möglicher Konfliktpunkte beim Linksabbiegen;
- Fig. 3a: eine schematische Darstellung einer typischen Verkehrssituation an einer X-Kreuzung zur Erläuterung unterschiedlicher Szenarien unter Berücksichtigung der Rechts-vor-Links-Vorfahrtsregel;
- Fig. 3b: eine schematische Darstellung einer typischen Verkehrssituation an einer X-Kreuzung zur Erläuterung unterschiedlicher Szenarien unter Berücksichtigung der durch Verkehrszeichen begründeten Vorfahrtsregeln, wobei das Kraftfahrzeug Vorfahrt genießt;
- Fig. 3c: eine schematische Darstellung einer typischen Verkehrssituation an einer X-Kreuzung zur Erläuterung unterschiedlicher Szenarien unter Berücksichtigung der durch Verkehrszeichen begründeten Vorfahrtsregeln, wobei das Kraftfahrzeug keine Vorfahrt genießt;
- Fig. 3d: eine schematische Darstellung einer typischen Verkehrssituation an einer X-Kreuzung zur Erläuterung unterschiedlicher Szenarien unter Berücksichtigung der durch eine Lichtsignalanlage geregelten Vorfahrt, wobei verträgliche Szenarien betrachtet werden;
- Fig. 3e: eine schematische Darstellung einer typischen Verkehrssituation an einer X-Kreuzung zur Erläuterung unterschiedlicher Szenarien unter Berücksichtigung der durch eine Lichtsignalanlage geregelten Vorfahrt, wobei bedingt verträgliche Szenarien betrachtet werden;
- Fig. 4: eine schematische Darstellung der Verknüpfung von mehreren elementaren Situationen innerhalb eines Szenarios;
- Fig. 5a: eine schematische Darstellung eines beispielhaften Szenarios von aufeinander folgenden elementaren Situationen beim Abbiegen;
- Fig. 5b: eine schematische Darstellung von weiteren aufeinanderfolgenden elementaren Situationen des beispielhaften Szenarios Abbiegen (Fortsetzung von Fig. 5a);
- Fig. 6a: eine schematische Darstellung zur Erläuterung von Zielpunkten, welche den einzelnen elementaren Situationen beim Linksabbiegen zugeordnet werden;
- Fig. 6b: eine schematische Darstellung zur Erläuterung von Zielpunkten, welche den einzelnen elementaren Situationen beim Rechtsabbiegen zugeordnet werden;
- Fig. 7a: ein schematisches Ablaufdiagramm zum Erläutern Abbiegemanövers, wobei das Abbiegemanöver auf elementaren Situationen basiert;
- Fig. 7b: eine Legende zu den in Fig. 7a gezeigten elementaren Situationen;
- Fig. 8: ein schematische Darstellung einer Vorrichtung zum automatisierten Fahren;
- Fig. 9a: eine schematische Darstellung einer Verkehrssituation zur Erläuterung einer elementaren Situation;
- Fig. 9b: eine schematische Darstellung der Verkehrssituation zur Erläuterung einer nachfolgenden elementaren Situation;
- Fig. 9c: eine schematische Darstellung der Verkehrssituation zur Erläuterung einer nachfolgenden elementaren Situation;
- Fig. 9d: eine schematische Darstellung der Verkehrssituation zur Erläuterung einer nachfolgenden elementaren Situation.

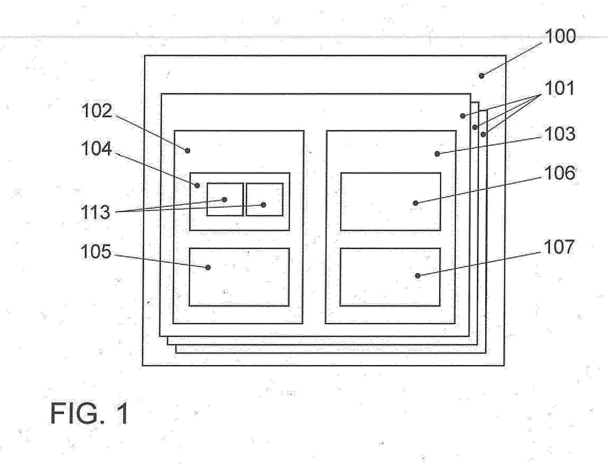

Fig. 1 zeigt eine schematische Darstellung des Aufbaus eines Szenarios 100. Ein Szenario 100 ist beispielweise ein Linksabbiegen an einer Kreuzung. Das Szenario umfasst mindestens eine elementare Situation 101. Umfasst das Szenario 100 mehrere elementare Situationen 101, so sind diese zeitlich geordnet und miteinander verbunden. Jede elementare Situation 101 umfasst dabei eine Szene 102 und eine Beschreibung des Zustands 103 des Kraftfahrzeugs. Die Szene 102 umfasst beispielsweise eine Szenerie 104 und dynamische Elemente 105. Die Szenerie 104 umfasst alle statischen Objekte 113 des Umfeldes, die dynamischen Elemente 105 umfassen beispielswiese Ampelphasen etc. Der Zustand 103 des Kraftfahrzeugs umfasst beispielsweise eine Aktion 106 des Fahrers und automatisierte Aktionen 107 einer Steuerung.

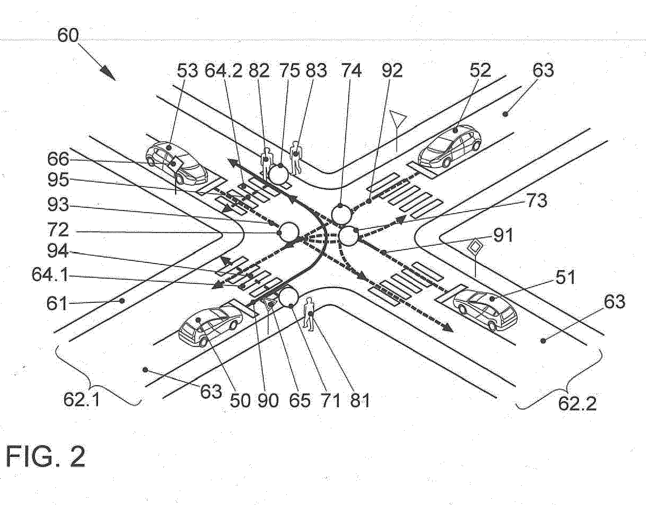

Fig. 2 zeigt eine schematische Darstellung einer typischen Verkehrssituation 60 an einer Kreuzung 61 zur Erläuterung möglicher Konfliktpunkte 71, 72, 73, 74, 75 welche beim Linksabbiegen eines Kraftfahrzeugs 50 mit anderen Verkehrsteilnehmern auftreten können. Die sich kreuzenden Straßen 62.1, 62.2 besitzen dabei pro Richtung jeweils eine Fahrspur 63. Aus jeder Richtung der Kreuzung 61 kommt jeweils ein Kraftfahrzeug 50, 51, 52, 53. Zusätzlich sind noch mehrere Fußgänger 81, 82, 83 vorhanden, welche die Straßen 62.1, 62.2 auf Zebrastreifen 64.1, 64.2 überqueren oder überqueren wollen. Je nachdem, wie die anderen Kraftfahrzeuge 51, 52, 53 planen, weiterzufahren, ergeben sich für das Kraftfahrzeug 50 beim Linksabbiegen die Konfliktpunkte 72, 73, 74, an denen die Trajektorien 90, 91, 92, 93 der Kraftfahrzeuge 50, 51, 52, 53 miteinander kollidieren können. Darüber hinaus gibt es zwei mögliche Konfliktpunkte 71, 75 der Trajektorie 90 des Kraftfahrzeugs 50 mit den Trajektorien 94, 95 der Fußgänger 81, 82, 83.

Ein erster Konfliktpunkt 71 ergibt sich mit einem von rechts kommenden Fußgänger 81. Die Trajektorie 94 des Fußgängers 81 und die Trajektorie 90 des Kraftfahrzeugs 50 kreuzen sich. Das Kraftfahrzeug muss folglich solange warten, bis der Fußgänger 81 den Zebrastreifen 64.1 überquert hat. Erst dann kann das Kraftfahrzeug 50 den Zebrastreifen 64.1 passieren. Ein weiterer Konfliktpunkt 72 ergibt sich anschließend mit dem von links kommenden Kraftfahrzeug 53, da sich die Trajektorien 90, 93 überschneiden. In Abhängigkeit der aktuell für die Verkehrssituation 60 geltenden Verkehrsregeln muss das Kraftfahrzeug 50 das von links kommende Kraftfahrzeug 53 passieren lassen. Hier ist für die Straße 62.1, auf der sich das Kraftfahrzeug 50 befindet, ein "Vorfahrt beachten"-Schild 65 und für die Straße 62.2, auf der sich das andere Kraftfahrzeug 53 befindet, ein Vorfahrtschild 66 vorhanden. Das Kraftfahrzeug 50 muss also warten, bis das andere Kraftfahrzeug 53 die Kreuzung 61 passiert hat. Ist dies geschehen, so finden sich die nächsten Konfliktpunkte 73, 74 mit Kraftfahrzeugen 51, 52, die von rechts bzw. aus entgegengesetzter Richtung kommen. Auch diese Kraftfahrzeuge 51, 52 haben in der Verkehrssituation 60 jeweils Vorfahrt, so dass das Kraftfahrzeug 50 auf ihr Passieren warten muss. Als letzter Konfliktpunkt 75 kann es zu einer Kollision mit den Fußgängern 82, 83 kommen, welche den Zebrastreifen 64.2 überqueren wollen. Auch hier muss das Kraftfahrzeug 50 warten, bis sie den Zebrastreifen 64.2 überquert haben.

Die Konfliktpunkte 71, 72, 73, 74, 75 verdeutlichen in diesem Beispiel, dass sich die Verkehrssituation 60 in mehrere Teilprobleme oder Teilschritte zerlegen lässt. Die Verkehrssituation 60 insgesamt stellt dann im Sinne der Erfindung ein Szenario dar, das dem Linksabbiegen von einer einspurigen Straße 62.1 an einer X-Kreuzung 61 auf eine einspurige Straße 62.2 ohne Vorfahrt entspricht. Die Situationen bzw. Problemstellungen zu den einzelnen Konfliktpunkten 71, 72, 73, 74, 75 entsprechen dann den elementaren Situationen des Szenarios.

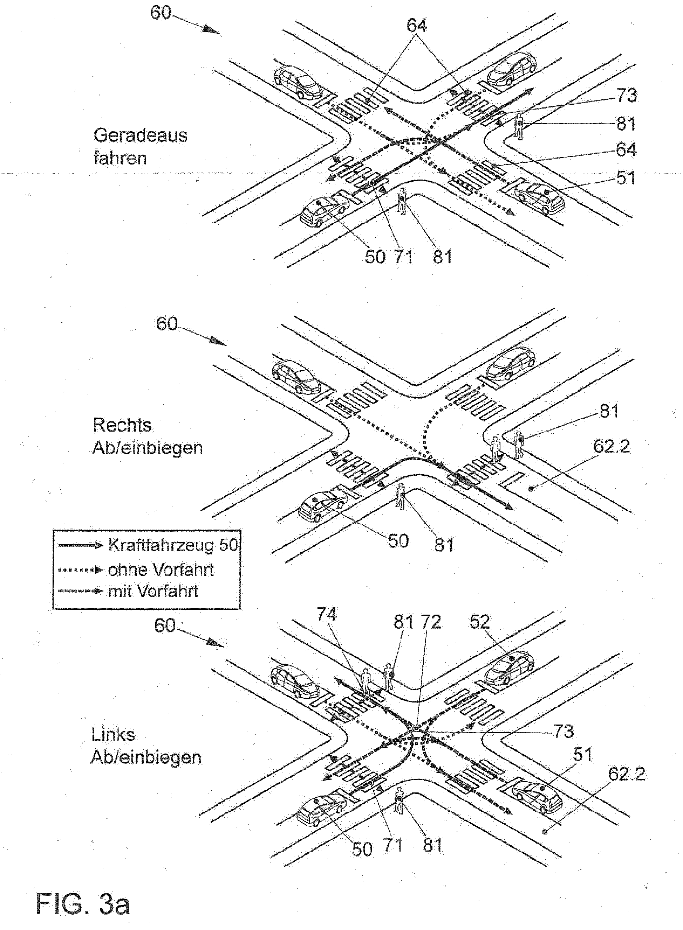

Die Figuren 3a bis 3e zeigen eine schematische Darstellung der in Fig. 2 bereits gezeigten Verkehrssituation an einer X-Kreuzung zur Erläuterung der möglichen Manöver unter Beachtung unterschiedlicher Vorfahrtsregeln und Vorfahrtsrechte. Jede der Darstellungen entspricht dabei einem Szenario.

Generell gibt es an der X-Kreuzung drei mögliche Manöver, die von dem Kraftfahrzeug ausgeführt werden können: Geradeausfahren, Rechtsabbiegen und Linksabbiegen. Dabei ergibt sich für jede der Möglichkeiten ein anderes Szenario, wobei die Szenarien dabei jeweils aus unterschiedlichen elementaren Situationen bestehen können.

Fig. 3a zeigt die drei Manöver bzw. Szenarien, wenn die Vorfahrtsrechte nach der Rechts-vor-Links-Regel geregelt sind. In allen drei Szenarien sind dabei die Rechte der Fußgänger 81 auf den jeweiligen Zebrastreifen 64 zu beachten. Fährt das Kraftfahrzeug 50 geradeaus, so gibt es einen Konfliktpunkt 71 mit einem Fußgänger von rechts. Anschließend gibt es einen Konfliktpunkt 72 mit einem anderen Kraftfahrzeug 51 von rechts und einen weiteren Konfliktpunkt 73 mit einem Fußgänger 81 von rechts.

In dem Szenario, wo das Kraftfahrzeug 50 nach rechts abbiegen will, muss auf den Fußgänger 81 von rechts gewartet werden, anschließend auf Fußgänger 81, welche die Straße 62.2, in die das Kraftfahrzeug 50 einbiegt, überqueren wollen. Beim Linksabbiegen ergeben sich ein Konfliktpunkt 71 mit einem Fußgänger 81 von rechts, anschließend ein Konfliktpunkt 72 mit einem anderen Kraftfahrzeug 51 von rechts und ein Konfliktpunkt 73 mit einem entgegenkommenden Kraftfahrzeug 52, schließlich ein letzter Konfliktpunkt 74 mit Fußgängern 81, die die Straße 62.2 überqueren, in welche das Kraftfahrzeug 50 einbiegt.

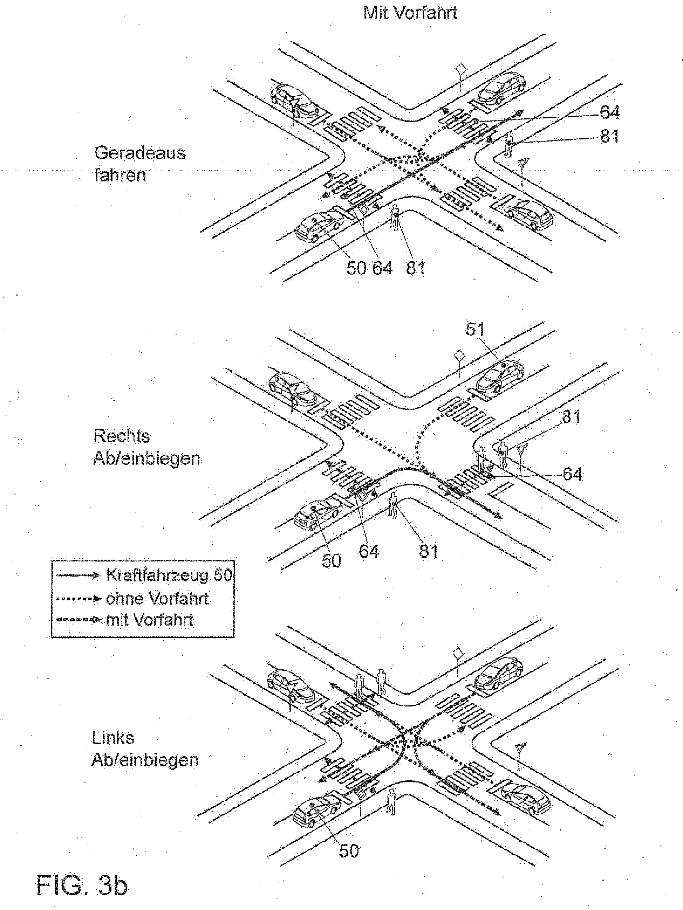

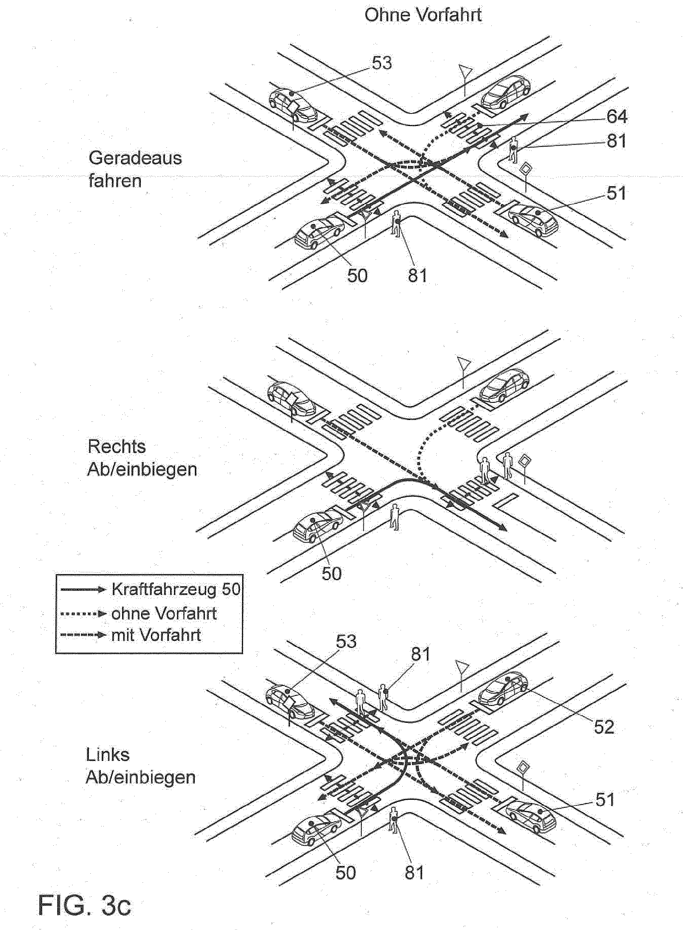

Die Figuren 3b und 3c zeigen die beiden Szenarien, in denen die Vorfahrtsrechte mittels Verkehrszeichen geregelt sind, sowohl für den Fall, dass das Kraftfahrzeug 50 Vorfahrt hat als auch für den Fall, dass das Kraftfahrzeug 50 keine Vorfahrt hat. Mit Vorfahrt muss das Kraftfahrzeug 50 beim Geradeausfahren lediglich auf Fußgänger 81 auf dem Zebrastreifen 64 warten. Auch beim Rechtsabbiegen muss ebenfalls nur auf die Fußgänger 81 der Zebrastreifen 64 gewartet werden. Beim Linksabbiegen hingegen, muss zusätzlich auf ein entgegenkommendes Kraftfahrzeug 51 gewartet werden. In den Szenarien ohne Vorfahrtsrecht muss auf die Fußgänger 81 und andere Kraftfahrzeuge 51, 53 von rechts und links gewartet werden. Beim Linksabbiegen muss auf die Fußgänger 81 und andere Kraftfahrzeuge 51, 52, 53 aus sämtlichen anderen Richtungen gewartet werden.

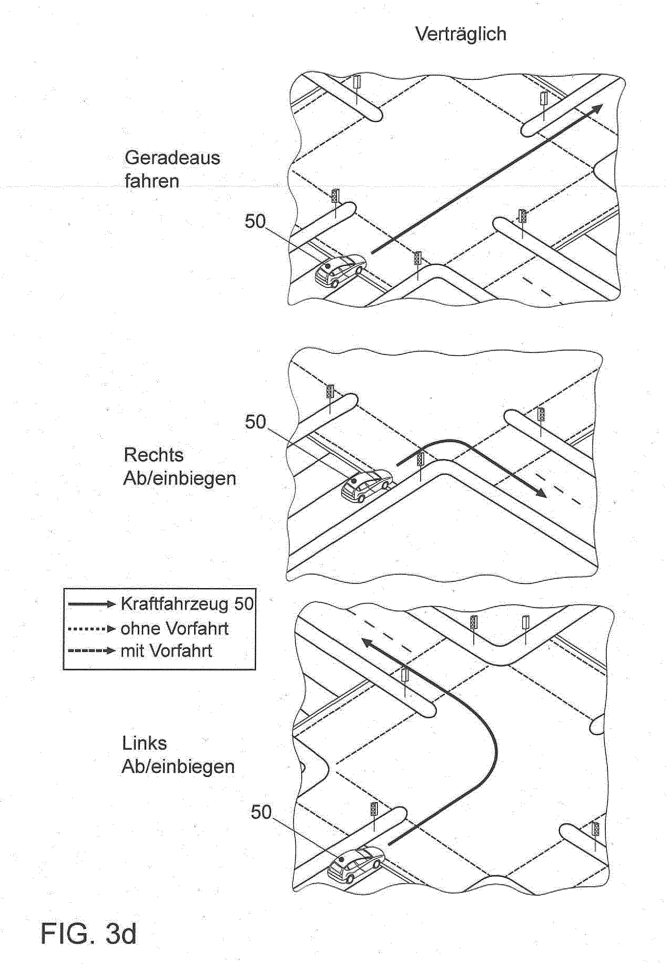

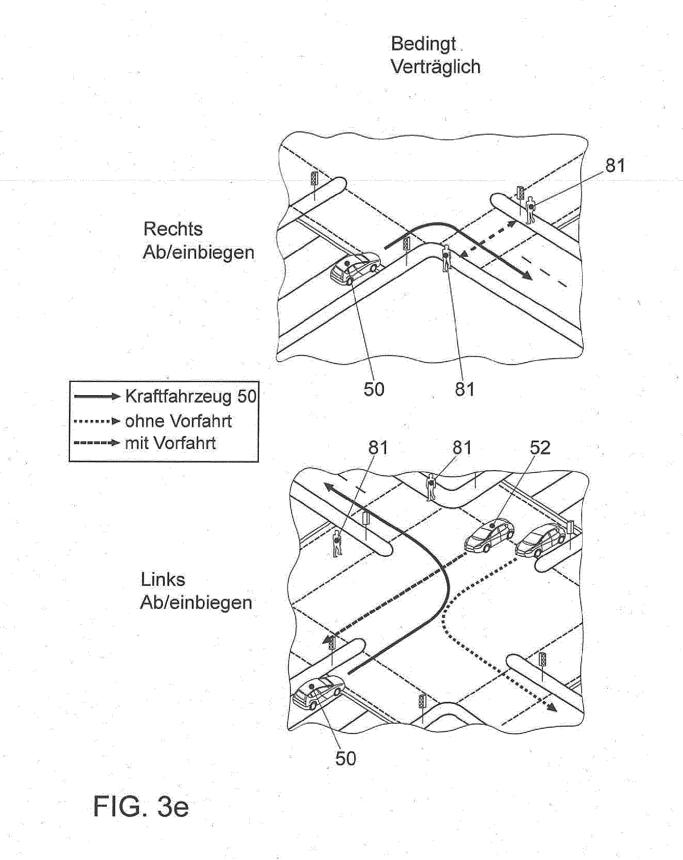

Die Figuren 3d und 3e zeigen die Szenarien für den Fall, dass eine Lichtsignalanlage (Ampel) den Verkehr regelt. Dabei wird unterschieden zwischen verträglichen und bedingt verträglichen Szenarien. Ein verträgliches Szenario hat keine Konfliktpunkte. Ein bedingt verträgliches Szenario hat hingegen zumindest einen potentiellen Konfliktpunkt, beispielsweise einen Schnittpunkt mit einer Trajektorie eines Fußgängers (oder Radfahrers) oder mit einer Trajektorie eines anderen Kraftfahrzeugs. Dabei entscheiden die in dem Szenario geltenden Vorfahrtsregeln darüber, ob ein Manöver verträglich oder bedingt verträglich ist.

Beim Geradeausfahren muss auf keinen anderen Verkehrsteilnehmer gewartet werden. Beim Rechtsabbiegen muss nur in der bedingt verträglichen Situation auf Fußgänger 81 gewartet werden, in der verträglichen Situation gibt es hingegen keinen potentiellen Konfliktpunkt, so dass das Kraftfahrzeug 50 einfach abbiegen kann. Beim Linksabbiegen muss im verträglichen Szenario nicht auf andere Verkehrsteilnehmer gewartet werden, da das Kraftfahrzeug 50 gegenüber allen anderen Verkehrsteilnehmern Vorfahrt genießt. Im bedingt verträglichen Szenario muss das Kraftfahrzeug 50 hingegen auf ein entgegenkommendes Kraftfahrzeug 52 und auf Fußgänger 81 gewartet werden.

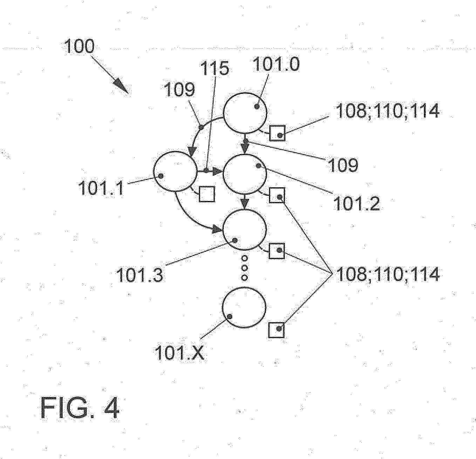

Fig. 4 zeigt eine schematische Darstellung eines Szenarios 100, welches mehrere elementare Situationen 101.0, 101.1, 101.2, 101.3, 101.X aufweist. Die elementaren Situationen 101.0, 101.1, 101.2, 101.3, 101.X sind zeitlich aufeinander folgend miteinander verknüpft und weisen jeweils als Attribute 108 mindestens einen Überwachungsbereich 110 und ein Freigabekriterium 114 auf. Erst wenn in einer aktuellen elementaren Situation 101.0, 101.1, 101.2, 101.3, 101.X das jeweilige Freigabekriterium 114 erfüllt ist, wird zur nachfolgenden elementaren Situation 101.1, 101.2, 101.3, 101.X gewechselt. Dabei ist es möglich, dass es zu einer elementaren Situation 101.0 mehr als eine potentiell nachfolgende elementare Situation 101.1, 101.2 gibt. Welche der potentiell nachfolgenden elementaren Situationen 101.1, 101.2 dabei auf die elementare Situation 101.0 nachfolgt, ergibt sich aus dem aktuellen Umfeld bzw. aus erfassten Umfelddaten. Beschreibt die elementare Situation 101.0 beispielsweise ein Annähern an eine Kreuzung, so kann der Fall auftreten, dass es sich um eine X-Kreuzung oder um eine T-Kreuzung handelt. Die bereitgestellten Umfelddaten lassen jedoch keine eindeutige Entscheidung zu, so dass lediglich zwei Hypothesen 109 aufgestellt werden können: Die X-Kreuzung entspricht dann der einen potentiell nachfolgenden elementaren Situation 101.1, die T-Kreuzung der zweiten potentiell nachfolgenden elementaren Situation 101.2. Nähert sich das Kraftfahrzeug dann weiter an die Kreuzung an, so werden die bereitgestellten Umfelddaten in der Regel besser, so dass irgendwann eine eindeutige Entscheidung getroffen werden kann bzw. eine Korrektur 115 der vorherigen Hypothese durchgeführt werden kann. Auf diese Weise wird das aktuell vorliegende Szenario fortlaufend überprüft und gegebenenfalls auf Grundlage aktuell bereitgestellter Umfelddaten korrigiert. Dadurch ist eine stets aktuelle Interpretation möglich.

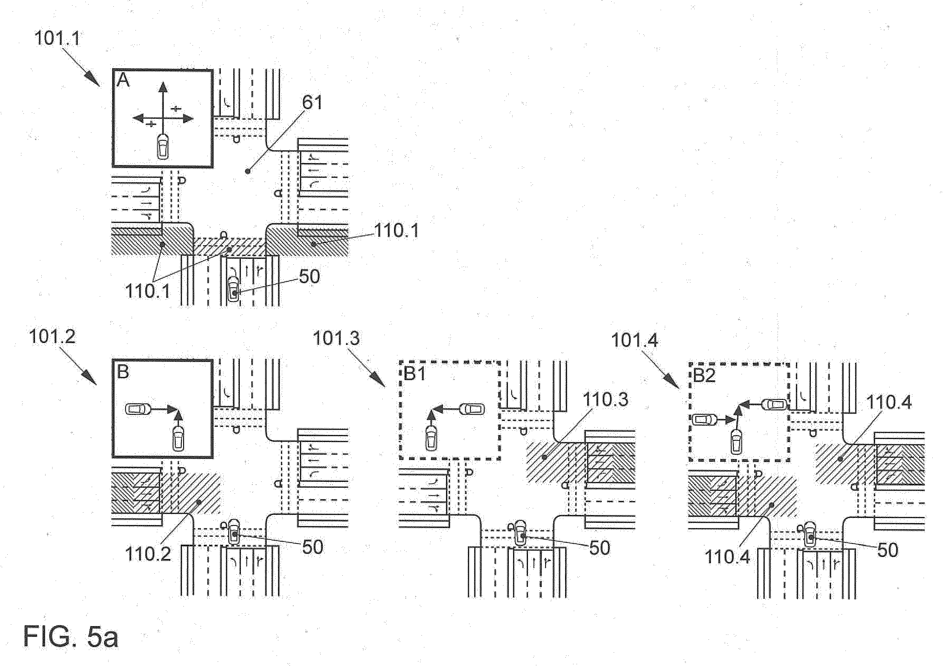

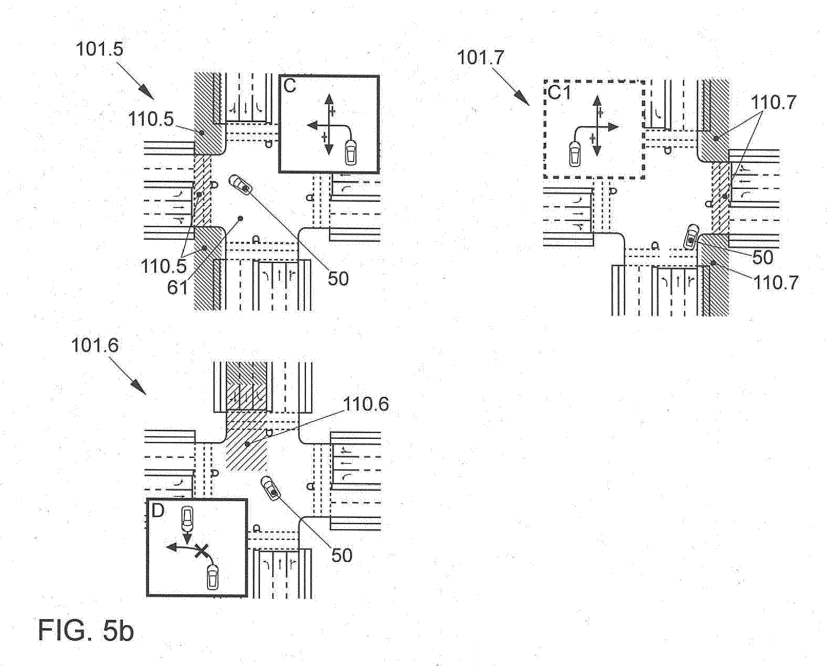

Die Figuren 5a und 5b zeigen die elementaren Situationen 101.1, 101.2, 101.2, 101.4, 101.5, 101.6, 101.7 eines beispielhaftes Szenarios, welches das Abbiegen eines Kraftfahrzeug 50 von einer dreispurigen Straße auf eine zweispurige Straße beschreibt, wobei die Vorfahrtsrechte nach Verkehrszeichen geregelt werden und das Kraftfahrzeug 50 kein Vorfahrtsrecht besitzt. In der ersten elementaren Situation 101.1 wechselt das Kraftfahrzeug 50 zum Linksabbiegen auf die linke Fahrspur und nähert sich der Kreuzung 61. Die Szenario-Interpretationseinrichtung erkennt, dass das Kraftfahrzeug 50 auf eine X-Kreuzung 61 zufährt und ein Linksabbiegen geplant ist. Dieses elementare Szenario 101.1 weist als Attribut einen Überwachungsbereich 110.1 auf, der den Fußgängerübergang und die Bereiche links und rechts auf dem Fußgängerweg zur Überwachung eines potentiellen Konfliktpunktes umfasst.

Das Kraftfahrzeug 50 muss auf passierende Fußgänger (oder Radfahrer) warten und erst wenn keine Fußgänger mehr die Straße überqueren oder überqueren wollen, ist das der elementaren Situation 101.1 zugeordnete Freigabekriterium erfüllt.

Gegenüber einer Überwachung der kompletten Kreuzung 61 ist eine Überwachung lediglich des Überwachungsbereiches 110.1 von Vorteil, da sehr viel weniger Informationen ausgewertet werden müssen. Für die Beurteilung des Freigabekriteriums in einer elementaren Situation ist jeweils nur eine Überwachung der zugehörigen Überwachungsbereiche notwendig. Die Szenario-Interpretationseinrichtung fragt bei der Umfeldwahrnehmungseinrichtung ab, ob sich Objekte innerhalb des Überwachungsbereiches 110.1 befinden. Dabei können auch zukünftige Trajektorien der Objekte auf Grundlage erfasster oder geschätzter Bewegungsdaten, beispielsweise über eine Prädiktionseinrichtung, geschätzt werden und der Szenario-Interpretationseinrichtung dann zur Verfügung gestellt werden.

Die nächste elementare Situation 101.2 folgt auf die erste elementare Situation 101.1 und berücksichtigt als potentiellen Konfliktpunkt ein von links kommendes Kraftfahrzeug. Dementsprechend ist der elementaren Situation 101.2 als Attribut ein Überwachungsbereich 110.2 auf der kreuzenden Fahrspur links vor dem Kraftfahrzeug 50 und ein entsprechendes Freigabekriterium (kein anderes Kraftfahrzeug von links) zugeordnet.

Eine weitere elementare Situation 101.3 berücksichtigt als potentiellen Konfliktpunkt ein von rechts kommendes anderes Kraftfahrzeug. Dementsprechend ist der elementaren Situation 101.3 als Attribut ein Überwachungsbereich 110.3 auf der kreuzenden Fahrspur rechts vor dem Kraftfahrzeug 50 und ein entsprechendes Freigabekriterium (kein anderes Kraftfahrzeug von rechts) zugeordnet.

Ein andere elementare Situation 101.4 fasst die beiden vorherigen elementaren Situationen 101.2, 101.3 zusammen. Dieser elementaren Situation 101.4 ist dann als Attribut ein Überwachungsbereich 110.4 auf der kreuzenden Fahrspur sowohl rechts als auch links vor dem Kraftfahrzeug 50 und ein entsprechendes Freigabekriterium (kein anderes Kraftfahrzeug von links oder rechts) zugeordnet.

In einer nachfolgenden elementaren Situation 101.5 (Fig. 5b) befindet sich das Kraftfahrzeug 50 bereits in der Mitte der Kreuzung 61. Hier muss das Kraftfahrzeug 50 auf Fußgänger warten, dementsprechend ist der elementaren Situation 101.5 ein Überwachungsbereich 110.5 zugeordnet, welcher die Gehwege links und rechts von dem Kraftfahrzeug 50 und den Fußgängerüberweg umfasst. Ein zugehöriges Freigabekriterium ist, dass sich kein Fußgänger mehr auf dem Fußgängerüberweg befindet und kein Fußgänger die Straße mehr zu überqueren beabsichtigt. Eine dazu entsprechende elementare Situation 101.7 ergibt sich für das Kraftfahrzeug 50 beim Rechtsabbiegen. Hier muss ebenfalls ein Überwachungsbereich 110.7 überwacht werden auf schwächere Verkehrsteilnehmer, die die Straße überqueren oder überqueren wollen.

In derselben Position des Kraftfahrzeugs 50 auf der Kreuzung ist beispielsweise eine weitere elementare Situation 101.6, dass das Kraftfahrzeug 50 auf ein entgegenkommendes Kraftfahrzeug warten muss. Der Überwachungsbereich 110.6 und das Freigabekriterium sind dann entsprechend definiert.

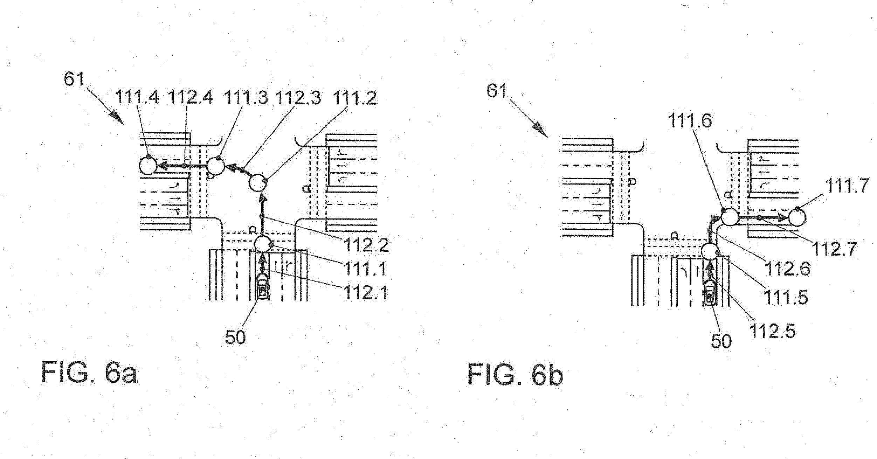

Die Figuren 6a und 6b zeigen beispielhaft von der Szenario-Interpretationseinrichtung geschätzte Zielpunkte 111.1, 111.2, 111.3, 111.4 für ein Linksabbiegen bzw. geschätzte Zielpunkte 111.5, 111.6, 111.7 für ein Rechtsabbiegen an einer Kreuzung 61. Dabei wurde zu jeder der elementaren Situationen (siehe dazu Figuren 5a und 5b) ein Zielpunkt 111.1, 111.2, 111.3, 111.4, 111.5, 111.6, 111.7 geschätzt. Prinzipiell ist es dabei auch möglich, dass derselbe Zielpunkt 111.1, 111.2, 111.3, 111.4, 111.5, 111.6, 111.7 mehreren elementaren Situationen zugeordnet wird oder ist. Jedes Mal, wenn das mindestens eine Freigabekriterium einer aktuellen elementaren Situation erfüllt ist, wird das Kraftfahrzeug 50 automatisiert zu dem der elementaren Situation zugeordneten Zielpunkt 111.1, 111.2, 111.3, 111.4, 111.5, 111.6, 111.7 gefahren. Eine Manöverplanungseinrichtung übernimmt dabei die Planung der konkreten Trajektorie 112.1, 112.2, 112.3, 112.4, 112.5, 112.6, 112.7 von einem Zielpunkt 111.1, 111.2, 111.3, 111.4, 111.5, 111.6, 111.7 zum nächsten und eine Steuerung führt die automatisierte Fahrt entlang der geplanten Trajektorie 112.1, 112.2, 112.3, 112.4, 112.5, 112.6, 112.7 durch Steuern mindestens einer Aktorik des Kraftfahrzeugs 50 durch.

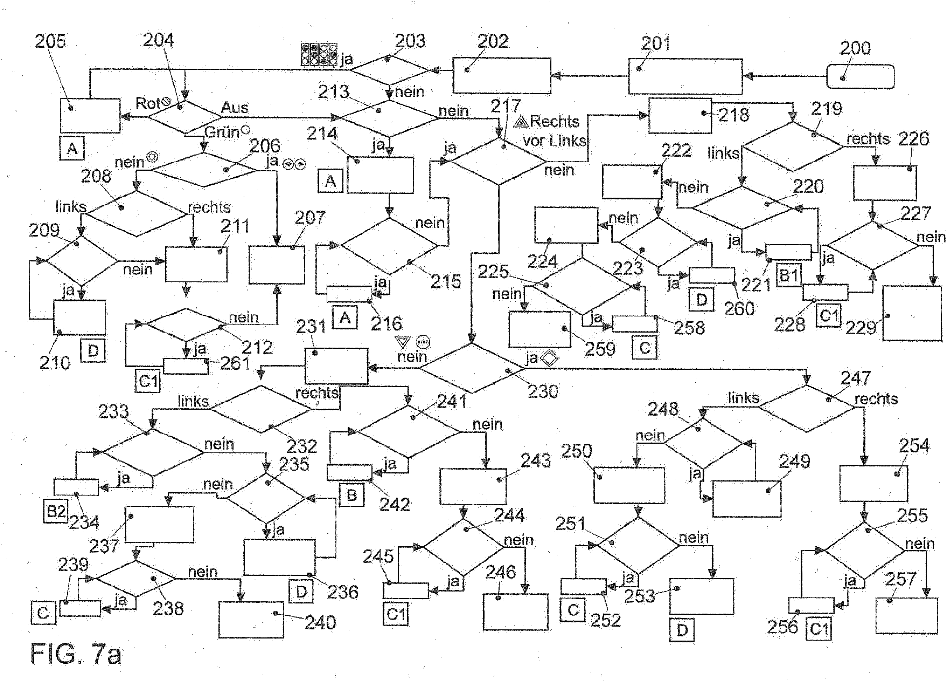

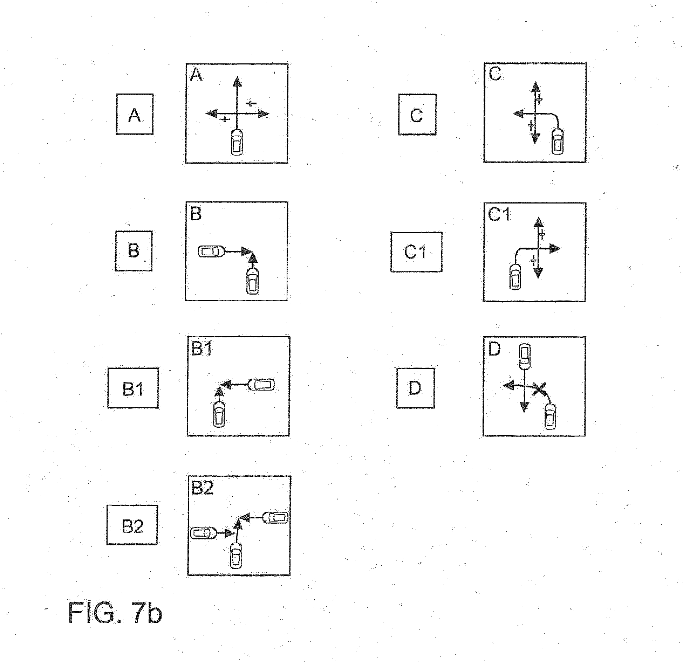

Fig. 7a zeigt ein schematisches Ablaufdiagramm zum Erläutern des Manövers "Abbiegen" an einer Kreuzung, wobei das Manöver auf elementaren Situationen basiert. Das Ablaufdiagramm umfasst dabei mehrere Szenarien, welche in Abhängigkeit des Umfeldes dynamisch angepasst werden. Dabei korrespondieren jeweils Teile des Ablaufdiagramms mit den elementaren Situationen, welche in den Figuren 5a und 5b beschrieben wurden. Die elementaren Situationen sind zur besseren Übersicht in Fig. 7b als Legende dargestellt, wobei die gleichen Bezeichnungen verwendet wurden wie in den Figuren 5a und 5b. Ferner werden die in den Figuren 6a und 6b definierten Zielpunkte verwendet.

In der Ausgangssituation 200 nähert sich das Kraftfahrzeug einer Kreuzung. Es wechselt 201 auf eine geeignete Fahrspur, um ein entsprechendes Manöver zum Linksabbiegen oder Rechtsabbiegen vorzubereiten. Hat es die Fahrspur gewechselt, so nähert 202 es sich weiter an die Kreuzung an. In einer ersten Abfrage 203 fragt die Szenario-Interpretationseinrichtung bei der Umfeldwahrnehmungseinrichtung an, ob eine Lichtsignalanlage (Ampel) vorhanden ist.

Ist dies der Fall, so wird abgefragt 204, welche Ampelphase vorliegt. Hier ergeben sich drei Möglichkeiten (rot, grün, ausgeschaltet). Wenn die Ampel auf "rot" geschaltet ist, muss das Kraftfahrzeug warten. Es wird dann automatisch an einen ersten von der Szenario-Interpretationseinrichtung geschätzten ersten Zielpunkt (Zielpunkte 111.1, 111.5 in Fig. 6a bzw. Fig. 6b) vorder Kreuzung herangefahren 205. Am ersten Zielpunkt angelangt, wird die Abfrage 204 der Ampelphase wiederholt. Ist die Ampelphase "grün", so wird in einer Abfrage 206 überprüft, ob der Verkehrsstrom verträglich ist oder nicht (bzw. bedingt verträglich). Ist der Verkehrsstrom verträglich, so kann komplett (nach links oder rechts) abgebogen werden 207, da das Kraftfahrzeug Vorfahrt genießt. Das Szenario ist dann beendet. Ist der Verkehrsfluss hingegen nur bedingt verträglich, das heißt, das Kraftfahrzeug muss trotz der grünen Ampelphase Vorfahrtsregeln beachten, so wird in einer Abfrage 208 zunächst geklärt, ob das Manöver, das durchgeführt werden soll, ein Linksabbiegen oder ein Rechtsabbiegen vorsieht. Soll nach links abgebogen werden, so wird in einer folgenden Abfrage 209 überprüft, ob Verkehr aus entgegengesetzter Richtung kommt. Ist dies der Fall, so wird das Kraftfahrzeug automatisiert bis zum zweiten von der Szenario-Interpretationseinrichtung geschätzten Zielpunkt (Zielpunkt 111.2 in Fig. 6a) gefahren 210. Dort wird die Abfrage 209 wiederholt. Kommt kein Verkehr aus entgegengesetzter Richtung, so wird das Kraftfahrzeug automatisiert bis zum dritten geschätzten Zielpunkt (Zielpunkt 111.3 in Fig. 6a) gefahren 211. Dort findet eine Abfrage 212 statt, ob schwächere Verkehrsteilnehmer (Fußgänger, Fahrradfahrer etc.) die Straße, in die eingebogen werden soll, überqueren oder überqueren wollen. Ist dies der Fall, so wird gehalten 261 und die Abfrage 212 wiederholt. Sind keine schwächeren Verkehrsteilnehmer vorhanden, so wird komplett abgebogen (entspricht Zielpunkt 111.4 in Fig. 6a). Ist das Manöver des Kraftfahrzeugs ein Rechtabbiegen, so ergibt die Abfrage 208 ein entsprechendes Ergebnis. Dann wird im nächsten Schritt 211 bis zum sechsten Zielpunkt (Zielpunkt 111.6 in Fig. 6b) gefahren. Dort wird die Abfrage 212 entsprechend ausgeführt. Sind keine schwächeren Verkehrsteilnehmer vorhanden, so wird komplett abgebogen 207 (entspricht Zielpunkt 111.7 in Fig. 6b).

Ergibt die Abfrage 204, dass die Ampel ausgeschaltet ist, so entspricht dies dem Fall, bei dem die Abfrage 203 ergibt, dass keine Ampel vorhanden ist. Dann wird in einer Abfrage 213 überprüft, ob sich ein Zebrastreifen vor dem Kraftfahrzeug befindet. Ist ein Zebrastreifen vorhanden, so wird das Kraftfahrzeug automatisiert bis zum ersten geschätzten Zielpunkt gefahren 214. Hier wartet das Kraftfahrzeug gegebenenfalls und es wird in einer Abfrage 215 überprüft, ob es schwächere Verkehrsteilnehmer gibt, welche den Zebrastreifen überqueren oder überqueren wollen. Es wird gewartet 216 und die Abfrage 215 wiederholt. Sind keine schwächeren Verkehrsteilnehmer (mehr) vorhanden oder ist kein Zebrastreifen vorhanden, so wird in einer Abfrage 217 überprüft, ob Verkehrszeichen vorhanden sind, welche die Vorfahrt regeln.

Ergibt die Abfrage 217, dass keine Verkehrsschilder vorhanden sind, so wird die "Rechts-vor-Links"-Regel angenommen. Die Schätzung des ersten Zielpunktes wird dann durch die Szenario-Interpretationseinrichtung wiederholt, so dass der erste Zielpunkt weiter nach hinten verschoben wird 218. Als nächstes wird in einer Abfrage 219 festgestellt, ob nach links oder rechts abgebogen werden soll. Soll nach links abgebogen werden, so wird in einer Abfrage 220 überprüft, ob andere Verkehrsteilnehmer von rechts kommen. Ist dies der Fall, so wird angehalten 221 und die Abfrage 220 wiederholt. Kommen keine anderen Verkehrsteilnehmer (mehr) von rechts, so wird automatisiert bis zum zweiten Zielpunkt (Zielpunkt 111.2 in Fig. 6a) gefahren 222. Dort wird in einer Abfrage 223 überprüft, ob Verkehr aus der entgegengesetzten Richtung kommt. Ist dies der Fall, so wird gehalten 260 und die Abfrage 223 wiederholt. Ist kein Verkehr aus entgegengesetzter Richtung (mehr) vorhanden, so wird das Kraftfahrzeug automatisiert bis zum dritten geschätzten Zielpunkt (Zielpunkt 111.3 in Fig. 6a) gefahren 224. Dort wird in einer Abfrage 225 überprüft, ob schwächere Verkehrsteilnehmer die Straße, in die eingebogen werden soll, überqueren oder überqueren wollen. Sind schwächere Verkehrsteilnehmer vorhanden, so wird gehalten 258 und die Abfrage 225 wiederholt. Sind keine schwächeren Verkehrsteilnehmer (mehr) vorhanden, so wird das Kraftfahrzeug automatisiert bis zum vierten geschätzten Zielpunkt (Zielpunkt 111.4 in Fig. 6a) gefahren 259.

Ergibt die Abfrage 219, dass nach rechts abgebogen werden soll, vereinfacht sich das Szenario. Es wird dann zum sechsten geschätzten Zielpunkt (Zielpunkt 111.6 in Fig. 6b) gefahren 226. Dort wird in einer Abfrage 227 überprüft, ob schwächere Verkehrsteilnehmer die Straße, in die eingebogen werden soll, überqueren oder überqueren wollen. Sind schwächere Verkehrsteilnehmer vorhanden, so wird gehalten 228 und die Abfrage 227 wiederholt. Sind keine schwächeren Verkehrsteilnehmer (mehr) vorhanden, so wird automatisiert bis zum siebten geschätzten Zielpunkt (Zielpunkt 111.7 in Fig. 6b) gefahren 229.

Ergibt die Abfrage 217 hingegen, dass Verkehrszeichen vorhanden sind, so wird in einer folgenden Abfrage 230 festgestellt, ob das Kraftfahrzeug Vorfahrt genießt oder nicht. Genießt es keine Vorfahrt, so wird der erste geschätzte Zielpunkt von der Szenario-Interpretationseinrichtung erneut geschätzt und dadurch (z.B. weiter nach hinten in Richtung der Kreuzung) verschoben 231. Anschließend wird in einer Abfrage 232 festgestellt, ob nach links oder nach rechts abgebogen werden soll. Soll nach links abgebogen werden, so wird in einer folgenden Abfrage 233 festgestellt, ob es Verkehr von links oder rechts gibt. Ist dies der Fall, so wird angehalten 234 und die Abfrage 233 wiederholt. Ist dies nicht der Fall, so wird in einer Abfrage 235 überprüft, ob Verkehr aus entgegengesetzter Richtung vorhanden ist. Ist Gegenverkehr vorhanden, so wird das Kraftfahrzeug automatisiert bis zum zweiten geschätzten Zielpunkt (Zielpunkt 111.2 in Fig. 6a) gefahren 236 und die Abfrage 235 wiederholt. Ist kein Gegenverkehr (mehr) vorhanden, so wird bis zum dritten geschätzten Zielpunkt (Zielpunkt 111.3 in Fig. 6a) gefahren 237. In einer Abfrage 238 wird dann überprüft, ob schwächere Verkehrsteilnehmer vorhanden sind, die die Straße, in die eingebogen werden soll, überqueren oder überqueren wollen. Sind schwächere Verkehrsteilnehmer vorhanden, so wird gehalten 239 und die Abfrage 238 wiederholt. Sind keine schwächeren Verkehrsteilnehmer (mehr) vorhanden, so wird bis zum vierten geschätzten Zielpunkt (Zielpunkt 111.4 in Fig. 6a) gefahren 240.

Ergibt die Abfrage 232 hingegen, dass nach rechts abgebogen werden soll, so wird in einer Abfrage 241 überprüft, ob Verkehr von links oder rechts vorhanden ist. Ist Querverkehr vorhanden, so wird gehalten 242 und die Abfrage 241 wiederholt. Ist kein Querverkehr (mehr) vorhanden, so wird bis zum sechsten geschätzten Zielpunkt (Zielpunkt 111.6 in Fig. 6b) gefahren 243. Hier wird in einer Abfrage 244 überprüft, ob schwächere Verkehrsteilnehmer vorhanden sind, die die Straße, in die eingebogen werden soll, überqueren oder überqueren wollen. Sind schwächere Verkehrsteilnehmer vorhanden, so wird gehalten 245 und die Abfrage 244 wiederholt. Sind keine schwächeren Verkehrsteilnehmer (mehr) vorhanden, so wird bis zum siebten geschätzten Zielpunkt (Zielpunkt 111.7 in Fig. 6b) gefahren 246.

Ergibt die Abfrage 230, dass das Kraftfahrzeug Vorfahrt genießt, so wird in einer folgenden Abfrage 247 festgestellt, ob nach links oder nach rechts abgebogen werden soll. Soll nach links abgebogen werden, so wird anschließend in einer Abfrage 248 überprüft, ob Verkehr aus entgegengesetzter Richtung vorhanden ist. Ist Gegenverkehr vorhanden, so wird das Kraftfahrzeug automatisiert bis zum zweiten geschätzten Zielpunkt (Zielpunkt 111.2 in Fig. 6a) gefahren 249 und die Abfrage 248 wiederholt. Ist kein Gegenverkehr (mehr) vorhanden, so wird das Kraftfahrzeug automatisiert bis zum dritten geschätzten Zielpunkt (Zielpunkt 111.3 in Fig. 6a) gefahren 250. Dort wird in einer Abfrage 251 überprüft, ob schwächere Verkehrsteilnehmer vorhanden sind, die die Straße, in die eingebogen werden soll, überqueren oder überqueren wollen. Sind schwächere Verkehrsteilnehmer vorhanden, so wird gehalten 252 und die Abfrage 251 wiederholt. Sind keine schwächeren Verkehrsteilnehmer (mehr) vorhanden, so wird bis zum vierten geschätzten Zielpunkt (Zielpunkt 111.4 in Fig. 6a) gefahren 253.

Ergibt die Abfrage 247, dass nach rechts abgebogen werden soll, so wird das Kraftfahrzeug automatisiert bis zum sechsten geschätzten Zielpunkt (Zielpunkt 111.6 in Fig. 6b) gefahren 254. Dort wird in einer Abfrage 255 überprüft, ob schwächere Verkehrsteilnehmer vorhanden sind, die die Straße, in die eingebogen werden soll, überqueren oder überqueren wollen. Sind schwächere Verkehrsteilnehmer vorhanden, so wird gehalten 256 und die Abfrage 255 wiederholt. Sind keine schwächeren Verkehrsteilnehmer (mehr) vorhanden, so wird bis zum siebten geschätzten Zielpunkt (Zielpunkt 111.7 in Fig. 6b) gefahren 257.

Mit Erreichen des jeweiligen letzten Zielpunktes (Zielpunkt 111.4 in Fig. 6a bzw. Zielpunkt 111.7 in Fig. 6b) ist das jeweilige Szenario vollständig durchlaufen und damit beendet.

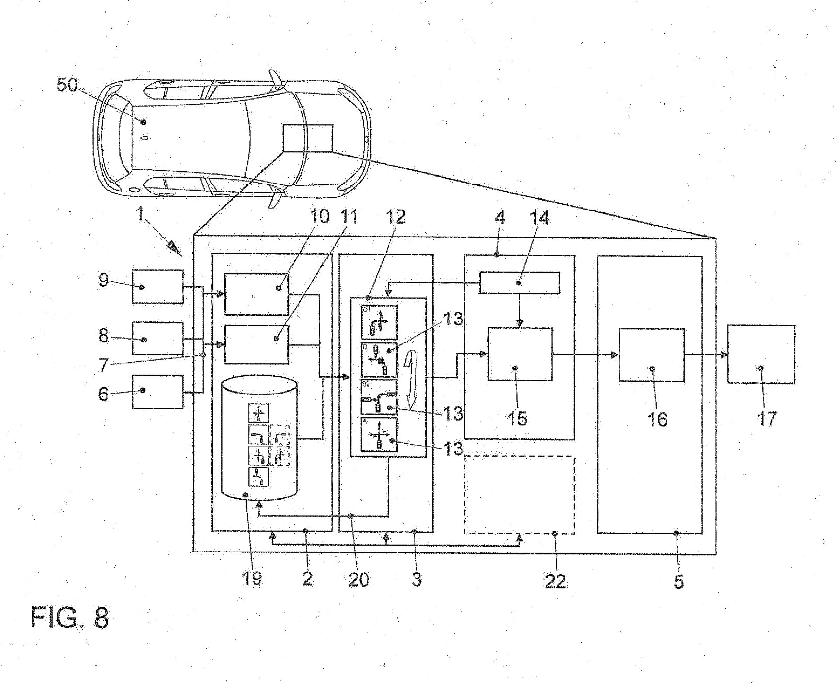

Fig. 8 zeigt eine schematische Darstellung einer Vorrichtung 1 zum automatisierten Fahren eines Kraftfahrzeugs 50. Die Vorrichtung 1 umfasst eine Umfeldwahrnehmungseinrichtung 2, eine Szenario-Interpretationseinrichtung 3, eine Manöverplanungseinrichtung 4 und eine Steuerung 5.

Ein Umfeld des Kraftfahrzeugs 50 wird mit Hilfe einer Sensorik 6 erfasst und als Umfelddaten 7 bereitgestellt. Eine solche Sensorik 6 kann beispielsweise eine Kamera, ein Radarsensor, ein Ultraschallsensor oder Ähnliches sein. Ferner können Umfelddaten 7 auch über eine Kommunikationsschnittstelle 8, beispielsweise eine Car2X-Schnittstelle, und/oder eine Umfeldkarte 9 bereitgestellt werden. Die Umfelddaten 7 werden von der Umfeldwahrnehmungseinrichtung 2 ausgewertet und Objekte in dem Umfeld des Kraftfahrzeugs erkannt. Dies kann beispielsweise über eine Fahrbahnerkennungseinrichtung 10 und/oder eine Objekterkennungseinrichtung 11 erfolgen. In der Fahrbahnerkennungseinrichtung 10 erfolgt eine Fusion der Umfelddaten 7, welche die Fahrbahn betreffen. In der Objekterkennungseinrichtung 11 erfolgt entsprechend eine Fusion der Umfelddaten 7, welche Objekte im Umfeld des Kraftfahrzeugs 50 beschreiben. Erkannte Objekte können beispielsweise andere Kraftfahrzeuge, schwächere Verkehrsteilnehmer (Fußgänger, Radfahrer etc.) oder auch Verkehrsschilder sein. Die Daten zu den erkannten Objekten werden von der Umfeldwahrnehmungseinrichtung 2 an die Szenario-Interpretationseinrichtung 3 weitergeleitet. Diese wertet die Daten aus und wählt auf Grundlage der ausgewerteten Daten ein Szenario 12 aus einer Menge von bereitgestellten Szenarien aus. Ein Szenario kann beispielsweise ein Abbiegen nach links oder rechts sein (wie z.B. in den Figuren 5a, 5b oder Fig. 7 dargestellt). Das ausgewählte Szenario 12 bildet eine Hypothese über die aktuelle Verkehrssituation. Es ist jederzeit möglich, dass die Szenario-Interpretationseinrichtung 3 das aktuelle Szenario 12 verwirft und ein anderes oder abgeändertes Szenario auswählt, wenn ein solches Szenario auf Grundlage von neuen Daten der Umfeldwahrnehmungseinrichtung 2 wahrscheinlicher ist. So kann bei Annäherung an eine Kreuzung beispielsweise zuerst von einem Szenario für eine T-Kreuzung ausgegangen werden, anschließend dieses Szenario aber durch eine X-Kreuzung ersetzt werden, weil in der Zwischenzeit neue (bessere) Daten von der Umfeldwahrnehmungseinrichtung 2 bereitgestellt worden sind.

Ein aktuelles Szenario 12 umfasst dabei mindestens eine elementare Situation 13, welche einem zeitlichen Zwischenschritt im aktuellen Szenario 12 entspricht. Die elementaren Situationen 13 sind dabei zeitlich folgend miteinander verbunden. Dabei wird zur jeweils nächsten elementaren Situation 13 übergegangen, wenn mindestens ein der elementaren Situation 13 als Attribut zugeordnetes Freigabekriterium erfüllt ist. Zum Überprüfen des mindestens einen Freigabekriteriums ist jeder elementaren Situation 13 als weiteres Attribut ein Überwachungsbereich zugeordnet. Der Überwachungsbereich wird von der Szenario-Interpretationseinrichtung 3 durch Anfrage 20 bei der Umfeldwahrnehmungseinrichtung 2 abgefragt. Dabei werden die Attribute für die aktuelle elementare Situation 13 an die Umfeldwahrnehmungseinrichtung 2 übermittelt, welche ihrerseits auch die elementaren Situationen 13 erkennen kann über eine Situationserkennungseinrichtung 19. Durch Zuordnung spezieller Attribute, wie beispielsweise bestimmten Objekten (Ampel, Verkehrsschild,...) können die bestimmten Objekte gezielt bei der Umfeldwahrnehmungseinrichtung abgefragt werden.

Für jede der elementaren Situationen 13 schätzt die Szenario-Interpretationseinrichtung 3 dann einen Zielpunkt. Der Zielpunkt wird an die Manöverplanungseinrichtung 4 übergeben. Die Manöverplanungseinrichtung 4 umfasst einen Missionsplaner 14, der die Planung der Route (z.B. welche Straßen bei der automatisierten Fahrt vom Startpunkt bis zum Ziel befahren werden sollen) des Kraftfahrzeugs vornimmt. Ferner übernimmt die Manöverplanungseinrichtung 4 mittels einer Trajektorienplanungseinrichtung 15 auch die Planung der konkreten Trajektorien zwischen den einzelnen von der Szenario-Interpretationseinrichtung 3 geschätzten Zielpunkten. Die konkret geplanten Trajektorien werden von der Manöverplanungseinrichtung 4 an die Steuerung 5 übergeben. Die Steuerung 5 umfasst dann beispielsweise eine Regelungseinrichtung 16, welche mindestens eine Aktorik 17 des Kraftfahrzeugs 50 regelt oder steuert, so dass das Kraftfahrzeug 50 auf der konkreten Trajektorie automatisiert entlangfährt.

Optional kann die Vorrichtung 1 eine Prädiktionseinrichtung 22 umfassen, welche innerhalb des mindestens einen Überwachungsbereiches einer elementaren Situation zukünftige Trajektorien von erkannten Objekten vorhersagt. Dabei können zum Beispiel auch Kartendaten, eine Verkehrsregelung, sowie Bewegungsdaten, z.B. eine Position, eine Orientierung, ein Einsatz eines Blinkers, von den erkannten Objekten mit einfließen. Zum Schätzen der Trajektorien können beispielsweise folgende Ansätze verwendet werden: Mixtures of Gaussian, Kalman-Filter, Monte-Carlo-Simulationen, Gaussian Process, Logistische Regression, Relevance Vector Machines, Support Vector, Hidden Markov Models und Bayessche Netze.

Die Vorrichtung oder Teile davon können auch als eine Kombination von Hardware und Software ausgebildet sein, beispielsweise in Form eines Mikrocontrollers oder Mikroprozessors auf dem ein entsprechendes Computerprogramm ausgeführt wird.

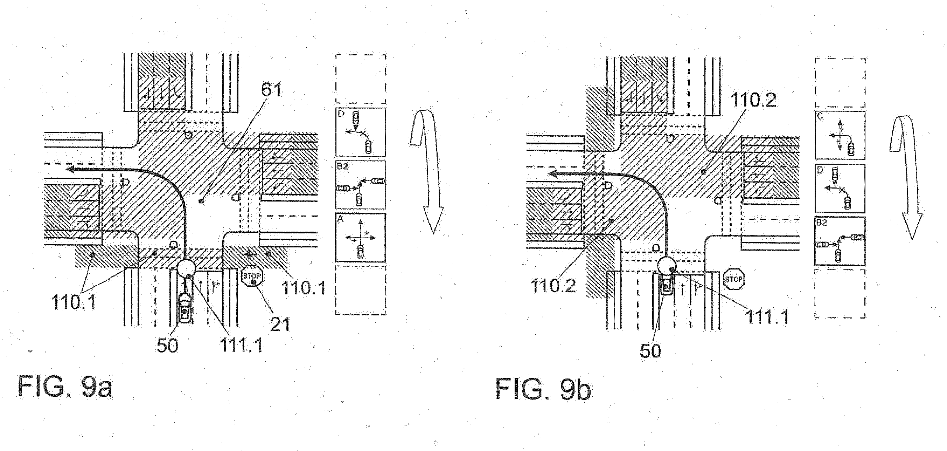

Ein schematischer Ablauf der elementaren Situationen in einem Szenario zum Linksabbiegen, wie sie ihn die Szenario-Interpretationseinrichtung durchführt, ist in den Figuren 9a bis 9d dargestellt.

In Fig. 9a stellt ein Missionsplaner eine Informationen über geeignete Fahrspuren bereit und das Kraftfahrzeug 50 führt einen Fahrspurwechsel auf eine geeignete Fahrspur durch. Das Kraftfahrzeug 50 nähert sich anschließend der Kreuzung 61. Das Szenario-Interpretationseinrichtung erkennt auf Grundlage der Daten der Umfeldwahrnehmungseinrichtung ein Linksabbiegemanöver und wählt das entsprechende Szenario aus. Anschließend fragt die Szenario-Interpretationseinrichtung bei der Umfeldwahrnehmungseinrichtung an, ob eine Ampel vorhanden ist. Wenn keine Ampel vorhanden ist, benötigt die Szenario-Interpretationseinrichtung zusätzlich Informationen über die geltende Vorfahrtregelung (Links-vor-Rechts oder Verkehrszeichen etc.). In diesem Beispiel erkennt die Umfeldwahrnehmungseinrichtung ein STOP-Schild 21, so dass ein Szenario mit einer entsprechenden Grundreihenfolge aus elementaren Situationen ausgewählt wird (siehe dazu auch den Ablauf in Fig. 7). Dabei stellen die folgenden elementaren Situationen jeweils Hypothesen über den zukünftigen Verlauf des Szenarios dar. Die Hypothesen können dann über die Umfeldwahrnehmungseinrichtung bestätigt oder widerlegt werden.

Die erste elementare Situation (Fig. 9a) fordert bei der Umfeldwahrnehmungseinrichtung die Information an, ob schwächere Verkehrsteilnehmer (Fußgänger oder Fahrradfahrer) in dem der ersten elementaren Situation zugeordneten Überwachungsbereich 110.1 vorhanden sind. Je nachdem, ob schwächere Verkehrsteilnehmer vorhanden sind oder nicht, wird von der Szenario-Interpretationseinrichtung ein erster Zielpunkt 111.1 geschätzt. Da der Szenario-Interpretationeinrichtung bereits im Voraus bekannt ist, wo Überwachungsbereiche 110.2 der nächsten elementaren Situation (Fig. 9b) sind, werden Informationen über von links und rechts kommende Fahrzeuge bei der Umfeldwahrnehmungseinrichtung nachgefragt.

Die Szenario-Interpretationseinrichtung ändert den Zielpunkt 111.1 nicht, solange noch Fußgänger oder Fahrräder die Straße überqueren oder überqueren wollen. Anderenfalls wird der Zielpunkt 111.1 nach vorne verschoben (vor einen potentiellen Konfliktpunkt mit einem von links kommenden Kraftfahrzeug). Es werden weiterhin Informationen über den Überwachungsbereich 110.2 bei der Umfeldwahrnehmungseinrichtung abgefragt.

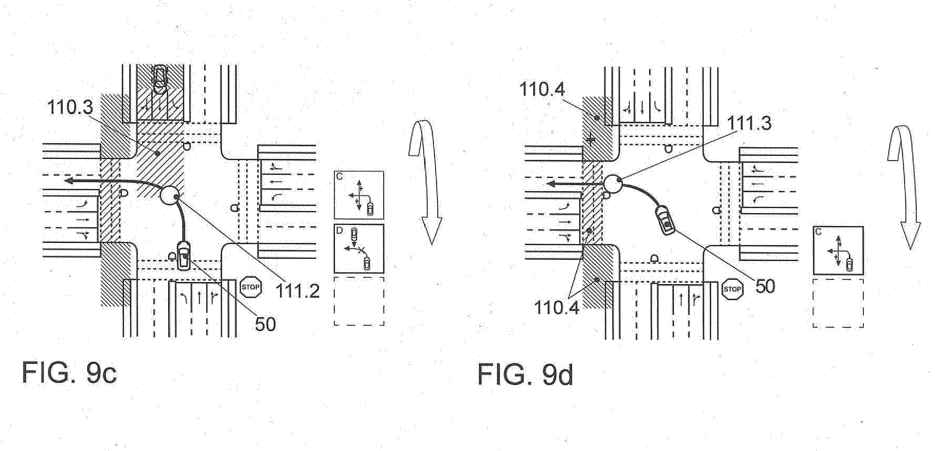

In der nächsten elementaren Situation (Fig. 9c) werden entgegenkommende Kraftfahrzeuge berücksichtigt. Entsprechend ist für diese elementare Situation der Überwachungsbereich 110.3 gewählt. Wenn kein Querverkehr vorhanden ist, wird der nächste Zielpunkt 111.2 von der Szenario-Interpretationseinrichtung geschätzt. Der geschätzte Zielpunkt 111.2 liegt dabei vor einem möglichen Konfliktpunkt mit einem entgegenkommenden Kraftfahrzeug. Das Kraftfahrzeug 50 wird dann automatisiert zum Zielpunkt 111.2 gefahren.

Ist kein Gegenverkehr vorhanden, so wird zur nächsten elementaren Situation (Fig. 9d) übergegangen. Dazu wird ein Zielpunkt 111.3 geschätzt, der automatisiert von dem Kraftfahrzeug 50 angefahren wird. In dieser elementaren Situation muss auf schwächere Verkehrsteilnehmer gewartet werden, welche die Straße, in die abgebogen werden soll, überqueren oder überqueren wollen. Entsprechend ist der Überwachungsbereich 110.4 definiert. Sind keine schwächeren Verkehrsteilnehmer (mehr) vorhanden, so wird das Szenario beendet, indem das Abbiegen vollendet.

### Bezugszeichenliste

- 1: Vorrichtung
- 2: Umfeldwahrnehmungseinrichtung
- 3: Szenario-Interpretationseinrichtung
- 4: Manöverplanungseinrichtung
- 5: Steuerung
- 6: Sensorik
- 7: Umfelddaten
- 8: Kommunikationsschnittstelle
- 9: Umfeldkarte
- 10: Fahrbahnerkennungseinrichtung
- 11: Objekterkennungseinrichtung
- 12: Szenario
- 13: elementare Situation
- 14: Missionsplaner
- 15: Trajektorienplanungseinrichtung
- 16: Regelungseinrichtung
- 17: Aktorik
- 21: STOP-Schild
- 22: Prädiktionseinrichtung
- 50: Kraftfahrzeug
- 51: weiteres Kraftfahrzeug
- 52: weiteres Kraftfahrzeug
- 53: weiteres Kraftfahrzeug
- 60: Verkehrssituation
- 61: Kreuzung
- 62.1: Straße
- 62.2: Straße
- 63: Fahrspur
- 64.1: Zebrastreifen
- 64.2: Zebrastreifen
- 65: "Vorfahrt beachten"-Schild
- 66: Vorfahrtschild
- 71: Konfliktpunkt
- 72: Konfliktpunkt
- 73: Konfliktpunkt
- 74: Konfliktpunkt
- 75: Konfliktpunkt
- 81: Fußgänger
- 82: Fußgänger
- 83: Fußgänger
- 90: Trajektorie
- 91: Trajektorie
- 92: Trajektorie
- 93: Trajektorie
- 100: Szenario
- 101: elementare Situation
- 101.0: elementare Situation
- 101.1: elementare Situation
- 101.2: elementare Situation
- 101.3: elementare Situation
- 101.4: elementare Situation
- 101.5: elementare Situation
- 101.6: elementare Situation
- 101.7: elementare Situation
- 101.X: elementare Situation
- 102: Szene
- 103: Zustand des Kraftfahrzeugs
- 104: Szenerie
- 105: dynamische Elemente
- 106: Aktion des Fahrers
- 107: automatisierte Aktion
- 108: Attribut
- 109: Hypothese
- 110: Überwachungsbereich
- 110.1: Überwachungsbereich
- 110.2: Überwachungsbereich
- 110.3: Überwachungsbereich
- 110.4: Überwachungsbereich
- 110.5: Überwachungsbereich
- 110.6: Überwachungsbereich
- 110.7: Überwachungsbereich
- 111.1: Zielpunkt
- 111.2: Zielpunkt
- 111.3: Zielpunkt
- 111.4: Zielpunkt
- 111.5: Zielpunkt
- 111.6: Zielpunkt
- 111.7: Zielpunkt
- 112.1: Trajektorie
- 112.2: Trajektorie
- 112.3: Trajektorie
- 112.4: Trajektorie
- 112.5: Trajektorie
- 112.6: Trajektorie
- 112.7: Trajektorie
- 113: Objekt
- 114: Freigabekriterium
- 115: Korrektur
- 200-261: Abfragen und Aktionen in einem Szenario

## Patentansprüche

1. Verfahren zum automatisierten Fahren eines Kraftfahrzeugs (50), umfassend die folgenden Schritte:
Bereitstellen von Umfelddaten (7),
Erkennen von Objekten (113) in den Umfelddaten (7) durch eine Umfeldwahrnehmungseinrichtung (2),
Auswählen eines aktuellen Szenarios (12, 100) aus einer bereitgestellten Menge von bekannten Szenarien (12, 100) durch eine Szenario-Interpretationseinrichtung (3) auf Grundlage der erkannten Objekte (113), wobei ein Szenario (12, 100) zeitlich geordnete und miteinander verbundene elementare Situationen (13, 101, 101.1, 101.2, 101.2, 101.3, 101.4, 101.5, 101.6, 101.7, 101.X) aufweist, und wobei jeder elementaren Situation (13, 101, 101.1, 101.2, 101.2, 101.3, 101.4, 101.5, 101.6, 101.7, 101.X) als Attribute (108) zumindest ein Überwachungsbereich (110.1, 110.2, 110.2, 110.3, 110.4, 110.5, 110.6, 110.7) und ein Freigabekriterium (114) zugeordnet sind,
ferner nacheinander für jede der elementaren Situationen (13, 101, 101.1, 101.2, 101.2, 101.3, 101.4, 101.5, 101.6, 101.7, 101.X) des aktuellen Szenarios (12, 100): Schätzen eines Zielpunktes (111.1, 111.2, 111.3, 111.4, 111.5, 111.6, 111.7) für die aktuell vorliegende elementare Situation (13, 101, 101.1, 101.2, 101.2, 101.3, 101.4, 101.5, 101.6, 101.7, 101.X) durch die Szenario-Interpretationseinrichtung (3), Planen einer Trajektorie (112.1, 112.2, 112.3, 112.4, 112.5, 112.6, 112.7) zu dem Zielpunkt (111.1, 111.2, 111.3, 111.4, 111.5, 111.6, 111.7) durch eine Manöverplanungseinrichtung (4),
Abfragen von Informationen über den zur elementaren Situation (13, 101, 101.1, 101.2, 101.2, 101.3, 101.4, 101.5, 101.6, 101.7, 101.X) gehörenden Überwachungsbereich (110.1, 110.2, 110.2, 110.3, 110.4, 110.5, 110.6, 110.7) bei der Umfeldwahrnehmungseinrichtung (2) durch die Szenario-Interpretationseinrichtung (3), Überprüfen eines Vorliegens des mindestens einen zur elementaren Situation (13, 101, 101.1, 101.2, 101.2, 101.3, 101.4, 101.5, 101.6, 101.7, 101.X) gehörenden Freigabekriteriums (114) auf Grundlage der abgefragten Informationen durch die Szenario-Interpretationseinrichtung (3), und
sofern das mindestens eine Freigabekriterium (114) erfüllt ist,
automatisiertes Fahren entlang der Trajektorie (112.1, 112.2, 112.3, 112.4, 112.5, 112.6, 112.7) bis zum Zielpunkt (111.1, 111.2, 111.3, 111.4, 111.5, 111.6, 111.7) durch Steuern mindestens einer Aktorik (17) des Kraftfahrzeugs (50) durch eine Steuerung (5).

2. Verfahren nach einem der vorangegangenen Ansprüche, **dadurch gekennzeichnet, dass** durch die Szenario-Interpretationseinrichtung (3) fortlaufend überprüft wird, ob das ausgewählte aktuelle Szenario (12, 100) noch vorliegt oder eine Änderung des aktuellen Szenarios (12, 100) notwendig ist.

3. Verfahren nach einem der vorangegangenen Ansprüche, **dadurch gekennzeichnet, dass** mindestens eine elementare Situation (13, 101, 101.1, 101.2, 101.2, 101.3, 101.4, 101.5, 101.6, 101.7, 101.X) ein weiteres Attribut (108) aufweist, wobei das weitere Attribut (108) ein bestimmtes Objekt (113) ist, dessen Vorhandensein durch die Szenario-Interpretationseinrichtung (3) bei der Umfeldwahrnehmungseinrichtung (2) abgefragt wird.

4. Verfahren nach einem der vorangegangenen Ansprüche, **dadurch gekennzeichnet, dass** die Schätzung des Zielpunktes (111.1, 111.2, 111.3, 111.4, 111.5, 111.6, 111.7) von der Szenario-Interpretationseinrichtung (3) dynamisch angepasst wird auf Grundlage der bei der Umfeldwahrnehmungseinrichtung (2) abgefragten Informationen.

5. Vorrichtung (1) zum automatisierten Fahren eines Kraftfahrzeugs (50), umfassend:
eine Umfeldwahrnehmungseinrichtung (2) zum Erkennen von Objekten (113) in bereitgestellten Umfelddaten (7),
eine Szenario-Interpretationseinrichtung (3) zum Auswählen eines aktuellen Szenarios (12, 100) aus einer bereitgestellten Menge von bekannten Szenarien (12, 100) auf Grundlage der erkannten Objekte (113), wobei ein Szenario (12, 100) zeitlich geordnete und miteinander verbundene elementare Situationen (13, 101, 101.1, 101.2, 101.2, 101.3, 101.4, 101.5, 101.6, 101.7, 101.X) aufweist, und wobei jeder elementaren Situation (13, 101, 101.1, 101.2, 101.2, 101.3, 101.4, 101.5, 101.6, 101.7, 101.X) als Attribute (108) zumindest ein Überwachungsbereich (110.1, 110.2, 110.2, 110.3, 110.4, 110.5, 110.6, 110.7) und ein Freigabekriterium (114) zugeordnet sind,
eine Manöverplanungseinrichtung (4) und
eine Steuerung (5),
wobei die Szenario-Interpretationseinrichtung (3) derart ausgebildet ist, einen Zielpunkt (111.1, 111.2, 111.3, 111.4, 111.5, 111.6, 111.7) für eine aktuell vorliegende elementare Situation (13, 101, 101.1, 101.2, 101.2, 101.3, 101.4, 101.5, 101.6, 101.7, 101.X) zu schätzen, Informationen über den zur elementaren Situation (13, 101, 101.1, 101.2, 101.2, 101.3, 101.X) gehörenden
Überwachungsbereich (110.1, 110.2, 110.2, 110.3, 110.4, 110.5, 110.6, 110.7) von der Umfeldwahrnehmungseinrichtung (2) abzufragen und ein Vorliegen des mindestens einen Freigabekriteriums (114) der aktuellen elementaren Situation (13, 101, 101.1, 101.2, 101.2, 101.3, 101.4, 101.5, 101.6, 101.7, 101.X) auf Grundlage der abgefragten Informationen zu überprüfen,
und wobei die Steuerung (5) derart ausgebildet, sofern das mindestens eine Freigabekriterium (114) erfüllt ist, das Kraftfahrzeug (50) entlang einer von der Manöverplanungseinrichtung (4) geplanten Trajektorie (112.1, 112.2, 112.3, 112.4, 112.5, 112.6, 112.7) bis zum Zielpunkt (111.1, 111.2, 111.3, 111.4, 111.5, 111.6, 111.7) durch Steuern mindestens einer Aktorik (17) des Kraftfahrzeugs (50) automatisiert zu fahren,
und die Szenario-Interpretationseinrichtung (3) ferner derart ausgebildet ist, nach Erreichen des Zielpunktes (111.1, 111.2, 111.3, 111.4, 111.5, 111.6, 111.7) eine nächstfolgende elementare Situation (13, 101, 101.1, 101.2, 101.2, 101.3, 101.4, 101.5, 101.6, 101.7, 101.X) des aktuellen Szenarios (12, 100) zu verarbeiten.

6. Vorrichtung (1) nach Anspruch 5, **dadurch gekennzeichnet, dass** die Vorrichtung (1) mindestens eine Sensorik (6) umfasst, welche das Umfeld des Kraftfahrzeugs (50) erfasst und die Umfelddaten (7) bereitgestellt.

7. Vorrichtung (1) nach Anspruch 5 oder 6, **dadurch gekennzeichnet, dass** die Vorrichtung (1) einen Speicher aufweist und die Umfelddaten (7) alternativ oder zusätzlich in Form einer gespeicherten Umfeldkarte (9) bereitgestellt werden.

8. Vorrichtung (1) nach einem der Ansprüche 5 bis 7, **dadurch gekennzeichnet, dass** die Vorrichtung (1) eine Kommunikationsschnittstelle (8) aufweist und die Umfelddaten (7) alternativ oder zusätzlich über die Kommunikationsschnittstelle (8) bereitgestellt werden.

9. Vorrichtung (1) nach einem der Ansprüche 5 bis 8, **dadurch gekennzeichnet, dass** die Vorrichtung (1) eine Prädiktionseinrichtung (22) umfasst, wobei die Prädiktionseinrichtung (22) derart ausgebildet ist, innerhalb des mindestens einen Überwachungsbereiches (110.1, 110.2, 110.2, 110.3, 110.4, 110.5, 110.6, 110.7) einer elementaren Situation (13, 101, 101.1, 101.2, 101.2, 101.3, 101.X) zukünftige Trajektorien von erkannten Objekten (113) vorherzusagen.

10. Vorrichtung (1) nach Anspruch 9, **dadurch gekennzeichnet, dass** ein Freigabekriterium (114) ist, dass eine Trajektorie (112.1, 112.2, 112.3, 112.4, 112.5, 112.6, 112.7) des Kraftfahrzeugs (50) zum nächstfolgenden Zielpunkt (111.1, 111.2, 111.3, 111.4, 111.5, 111.6, 111.7) kollisionsfrei mit Trajektorien anderer Objekte (113) ist.

## Claims

1. Method for the automated driving of a motor vehicle (50), comprising the following steps:
Providing surroundings data (7),
Identifying objects (113) in the surroundings data (7) by a surroundings perception unit (2),
Selecting a current scenario (12, 100) from a provided set of known scenarios (12, 100) by a scenario interpretation unit (3) on the basis of the identified objects (113), wherein a scenario (12, 100) has elementary situations (13, 101, 101.1, 101.2, 101.2, 101.3, 101.4, 101.5, 101.6, 101.7, 101.X) which are sorted in chronological order and connected to one another, and wherein to each elementary situation (13, 101, 101.1, 101.2, 101.2, 101.3, 101.4, 101.5, 101.6, 101.7, 101.X) are assigned as attributes (108) at least one monitoring region (110.1, 110.2, 110.2, 110.3, 110.4, 110.5, 110.6, 110.7) and one release criterion (114),
furthermore successively for each of the elementary situations (13, 101, 101.1, 101.2, 101.2, 101.3, 101.4, 101.5, 101.6, 101.7, 101.X) of the current scenario (12, 100):
Estimating a destination (111.1, 111.2, 111.3, 111.4, 111.5, 111.6, 111.7) for the currently present elementary situation (13, 101, 101.1, 101.2, 101.2, 101.3, 101.4, 101.5, 101.6, 101.7, 101.X) by the scenario interpretation unit (3),
Planning a trajectory (112.1, 112.2, 112.3, 112.4, 112.5, 112.6, 112.7) to the destination (111.1, 111.2, 111.3, 111.4, 111.5, 111.6, 111.7) by a maneuver planning unit (4),
Querying information about the monitoring region (110.1, 110.2, 110.2, 110.3, 110.4, 110.5, 110.6, 110.7) associated with the elementary situation (13, 101, 101.1, 101.2, 101.2, 101.3, 101.4, 101.5, 101.6, 101.7, 101.X) from the surroundings perception unit (2) by the scenario interpretation unit (3),
Verifying the presence of the at least one release criterion (114) associated with the elementary situation (13, 101, 101.1, 101.2, 101.2, 101.3, 101.4, 101.5, 101.6, 101.7, 101.X) on the basis of the information queried by the scenario interpretation unit (3), and
provided that the at least one release criterion (114) is met,
automated driving along the trajectory (112.1, 112.2, 112.3, 112.4, 112.5, 112.6, 112.7) to the destination (111.1, 111.2, 111.3, 111.4, 111.5, 111.6, 111.7) by controlling at least one actuator (17) of the motor vehicle (50) by a controller (5).

2. Method according to one of the preceding claims, **characterized in that** the scenario interpretation unit (3) continuously verifies whether the selected current scenario (12, 100) is still present or a change in the current scenario (12, 100) is necessary.

3. Method according to either of the preceding claims, **characterized in that** the least one elementary situation (13, 101, 101.1, 101.2, 101.2, 101.3, 101.4, 101.5, 101.6, 101.7, 101.X) has a further attribute (108), wherein the further attribute (108) is a specific object (113) whose presence is queried by the scenario interpretation unit (3) from the surroundings perception unit (2).

4. Method according to any one of the preceding claims, **characterized in that** the estimation of the destination (111.1, 111.2, 111.3, 111.4, 111.5, 111.6, 111.7) is dynamically adapted by the scenario interpretation unit (3) on the basis of the information queried from the surroundings perception unit (2).

5. Device (1) for the automated driving of a motor vehicle (50), comprising:
a surroundings perception unit (2) for identifying objects (113) in provided surroundings data (7),
a scenario interpretation unit (3) for selecting a current scenario (12, 100) from a provided set of known scenarios (12, 100) on the basis of the identified objects (113), wherein a scenario (12, 100) has elementary situations (13, 101, 101.1, 101.2, 101.2, 101.3, 101.4, 101.5, 101.6, 101.7, 101.X) which are sorted in chronological order and connected to one another, and wherein to each elementary situation (13, 101, 101.1, 101.2, 101.2, 101.3, 101.4, 101.5, 101.6, 101.7, 101.X) are assigned as attributes (108) at least one monitoring region (110.1, 110.2, 110.2, 110.3, 110.4, 110.5, 110.6, 110.7) and one release criterion (114),
a maneuver planning unit (4), and
a controller (5),
wherein the scenario interpretation unit (3) is designed to estimate a destination (111.1, 111.2, 111.3, 111.4, 111.5, 111.6, 111.7) for a currently present elementary situation (13, 101, 101.1, 101.2, 101.2, 101.3, 101.4, 101.5, 101.6, 101.7, 101.X), to query information about the monitoring region (110.1, 110.2, 110.2, 110.3, 110.4, 110.5, 110.6, 110.7) associated with the elementary situation (13, 101, 101.1, 101.2, 101.2, 101.3, 101.X) from the surroundings perception unit (2), and to verify a presence of the at least one release criterion (114) of the current elementary situation (13, 101, 101.1, 101.2, 101.2, 101.3, 101.4, 101.5, 101.6, 101.7, 101.X) on the basis of the queried information,
and wherein the controller (5) is designed, provided that the at least one release criterion (114) is met, to drive the motor vehicle (50) in an automated manner along a trajectory (112.1, 112.2, 112.3, 112.4, 112.5, 112.6, 112.7) planned by the maneuver planning unit (4) to the destination (111.1, 111.2, 111.3, 111.4, 111.5, 111.6, 111.7) by controlling at least one actuator (17) of the motor vehicle (50),
and the scenario interpretation unit (3) is furthermore designed to process a next elementary situation (13, 101, 101.1, 101.2, 101.2, 101.3, 101.4, 101.5, 101.6, 101.7, 101.X) of the current scenario (12, 100) after reaching the destination (111.1, 111.2, 111.3, 111.4, 111.5, 111.6, 111.7).

6. Device (1) according to Claim 5, **characterized in that** the device (1) comprises at least one sensor system (6), which detects the surroundings of the motor vehicle (50) and provides the surroundings data (7).

7. Device (1) according to Claims 5 or 6, **characterized in that** the device (1) has a memory and the surroundings data (7) are alternatively or additionally provided in the form of a stored surroundings map (9).

8. Device (1) according to any one of Claims 5 to 7, **characterized in that** the device (1) has a communication interface (8) and the surroundings data (7) are alternatively or additionally provided via the communication interface (8).

9. Device (1) according to any one of Claims 5 to 8, **characterized in that** the device (1) comprises a prediction unit (22), wherein the prediction unit (22) is designed to predict future trajectories of identified objects (113) within the at least one monitoring region (110.1, 110.2, 110.2, 110.3, 110.4, 110.5, 110.6, 110.7) of an elementary situation (13, 101, 101.1, 101.2, 101.2, 101.3, 101.X).

10. Device (1) according to Claim 9, **characterized in that** a release criterion (114) is that a trajectory (112.1, 112.2, 112.3, 112.4, 112.5, 112.6, 112.7) of the motor vehicle (50) to the next destination (111.1, 111.2, 111.3, 111.4, 111.5, 111.6, 111.7) is free of collisions with trajectories of other objects (113).

## Revendications

1. Procédé de conduite automatique d'un véhicule automobile (50), comprenant les étapes suivantes :
mise à disposition de données environnementales (7),
reconnaissance d'objets (113) dans les données environnementales (7) par un dispositif de perception de l'environnement (2),
sélection d'un scénario (12, 100) actuel parmi une quantité mise à disposition de scénarios (12, 100) connus par un dispositif d'interprétation de scénario (3) sur la base des objets (113) reconnus, un scénario (12, 100) comportant des situations élémentaires (13, 101, 101.1, 101.2, 101.2, 101.3, 101.4, 101.5, 101.6, 101.7, 101.X) chronologiques et reliées les unes aux autres et au moins une zone de surveillance (110.1, 110.2, 110.2, 110.3, 110.4, 110.5, 110.6, 110.7) et un critère de validation (114) étant attribués à chaque situation élémentaire (13, 101, 101.1, 101.2, 101.2, 101.3, 101.4, 101.5, 101.6, 101.7, 101.X) en guise d'attributs (108),
en outre, successivement pour chacune des situations élémentaires (13, 101, 101.1, 101.2, 101.2, 101.3, 101.4, 101.5, 101.6, 101.7, 101.X) du scénario (12, 100) actuel :
estimation, par le dispositif d'interprétation de scénario (3), d'un point de destination (111.1, 111.2, 111.3, 111.4, 111.5, 111.6, 111.7) pour la situation élémentaire (13, 101, 101.1, 101.2, 101.2, 101.3, 101.4, 101.5, 101.6, 101.7, 101.X) actuellement présente,
planification, par un dispositif de planification de manœuvre (4), d'une trajectoire (112.1, 112.2, 112.3, 112.4, 112.5, 112.6, 112.7) jusqu'au point de destination (111.1, 111.2, 111.3, 111.4, 111.5, 111.6, 111.7),
interrogation, par le dispositif d'interprétation de scénario (3), d'informations concernant la zone de surveillance (110.1, 110.2, 110.2, 110.3, 110.4, 110.5, 110.6, 110.7) associée à la situation élémentaire (13, 101, 101.1, 101.2, 101.2, 101.3, 101.4, 101.5, 101.6, 101.7, 101.X) auprès du dispositif de perception de l'environnement (2),
vérification de la présence de l'au moins un critère de validation (114) associé à la situation élémentaire (13, 101, 101.1, 101.2, 101.2, 101.3, 101.4, 101.5, 101.6, 101.7, 101.X) sur la base des informations interrogées par le dispositif d'interprétation de scénario (3) et
si l'au moins un critère de validation (114) est rempli,
conduite automatique le long de la trajectoire (112.1, 112.2, 112.3, 112.4, 112.5, 112.6, 112.7) jusqu'au point de destination (111.1, 111.2, 111.3, 111.4, 111.5, 111.6, 111.7) au moyen de la commande d'au moins un système d'actionneurs (17) du véhicule automobile (50) par un dispositif de commande (5).

2. Procédé selon l'une quelconque des revendications précédentes, **caractérisé en ce qu'il** est vérifié en continu par le dispositif d'interprétation de scénario (3) si le scénario (12, 100) actuel sélectionné est encore présent ou si une modification du scénario (12, 100) actuel est nécessaire.

3. Procédé selon l'une quelconque des revendications précédentes, **caractérisé en ce qu'au** moins une situation élémentaire (13, 101, 101.1, 101.2, 101.2, 101.3, 101.4, 101.5, 101.6, 101.7, 101.X) comporte un autre attribut (108), l'autre attribut (108) étant un objet (113) précis, dont la présence est interrogée par le dispositif d'interprétation de scénario (3) auprès du dispositif de perception de l'environnement (2).

4. Procédé selon l'une quelconque des revendications précédentes, **caractérisé en ce que** l'estimation du point de destination (111.1, 111.2, 111.3, 111.4, 111.5, 111.6, 111.7) par le dispositif d'interprétation de scénario (3) est adaptée de manière dynamique sur la base des informations interrogées auprès du dispositif de perception de l'environnement (2).

5. Dispositif (1) de conduite automatique d'un véhicule automobile (50), comprenant :
un dispositif de perception de l'environnement (2) destiné à reconnaître des objets (113) dans des données environnementales (7) mises à disposition,
un dispositif d'interprétation de scénario (3) destiné à sélectionner un scénario (12, 100) actuel parmi une quantité mise à disposition de scénarios (12, 100) connus sur la base des objets (113) reconnus, un scénario (12, 100) comportant des situations élémentaires (13, 101, 101.1, 101,2, 101.2, 101.3, 101.4, 101.5, 101.6, 101.7, 101.X) chronologiques et reliées les unes aux autres et au moins une zone de surveillance (110.1, 110.2, 110.2, 110.3, 110.4, 110.5, 110.6, 110.7) et un critère de validation (114) étant attribués à chaque situation élémentaire (13, 101, 101.1, 101.2, 101.2, 101.3, 101.4, 101.5, 101.6, 101.7, 101.X) en guise d'attributs (108),
un dispositif de planification de manœuvre (4) et
un dispositif de commande (5),
le dispositif d'interprétation de scénario (3) étant conçu de manière à estimer un point de destination (111.1, 111.2, 111.3, 111.4, 111.5, 111.6, 111.7) pour une situation élémentaire (13, 101, 101.1, 101.2, 101.2, 101.3, 101.4, 101.5, 101.6, 101.7, 101.X) actuellement présente, interroger des informations concernant la zone de surveillance (110.1, 110.2, 110.2, 110.3, 110.4, 110.5, 110.6, 110.7) associée à la situation élémentaire (13, 101, 101.1, 101.2, 101.2, 101.3, 101.X) auprès du dispositif de perception de l'environnement (2) et vérifier la présence de l'au moins un critère de validation (114) de la situation élémentaire (13, 101, 101.1, 101.2, 101.2, 101.3, 101.4, 101.5, 101.6, 101.7, 101.X) actuelle sur la base des informations interrogées,
et le dispositif de commande (5) étant conçu de manière à, si l'au moins un critère de validation (114) est rempli, conduire de manière automatique le véhicule automobile (50) le long d'une trajectoire (112.1, 112.2, 112.3, 112.4, 112.5, 112.6, 112.7) planifiée par le dispositif de planification de manœuvre (4) jusqu'au point de destination (111.1, 111.2, 111.3, 111.4, 111.5, 111.6, 111.7) au moyen de la commande d'au moins un système d'actionneurs (17) du véhicule automobile (50),
et le dispositif d'interprétation de scénario (3) étant en outre conçu de manière à, après que le point de destination (111.1, 111.2, 111.3, 111.4, 111.5, 111.6, 111.7) est atteint, traiter une situation élémentaire (13, 101, 101.1, 101.2, 101.2, 101.3, 101.4, 101.5, 101.6, 101.7, 101.X) suivante du scénario (12, 100) actuel.

6. Dispositif (1) selon la revendication 5, **caractérisé en ce que** le dispositif (1) comprend au moins un système de capteurs (6), qui détecte l'environnement du véhicule automobile (50) et met à disposition les données environnementales (7).

7. Dispositif (1) selon la revendication 5 ou 6, **caractérisé en ce que** le dispositif (1) comporte une mémoire et les données environnementales (7) sont mises à disposition de manière alternative ou en plus sous la forme d'une carte d'environnement (9) enregistrée.

8. Dispositif (1) selon l'une quelconque des revendications 5 à 7, **caractérisé en ce que** le dispositif (1) comporte une interface de communication (8) et les données environnementales (7) sont mises à disposition de manière alternative ou en plus par le biais de l'interface de communication (8).

9. Dispositif (1) selon l'une quelconque des revendications 5 à 8, **caractérisé en ce que** le dispositif (1) comprend un dispositif de prédiction (22), le dispositif de prédiction (22) étant conçu de manière à prédire des trajectoires futures d'objets (113) reconnus dans l'au moins une zone de surveillance (110.1, 110.2, 110.2, 110.3, 110.4, 110.5, 110.6, 110.7) d'une situation élémentaire (13, 101, 101.1, 101.2, 101.2, 101.3, 101.X).

10. Dispositif (1) selon la revendication 9, **caractérisé en ce qu'un** critère de validation (114) est le fait qu'une trajectoire (112.1, 112.2, 112.3, 112.4, 112.5, 112.6, 112.7) du véhicule automobile (50) jusqu'au point de destination suivant (111.1, 111.2, 111.3, 111.4, 111.5, 111.6, 111.7) est sans collision avec des trajectoires d'autres objets (113).
